(19) **Europäisches Patentamt / European Patent Office / Office européen des brevets**

(11) **EP 4 651 407 A1**

(12) **EUROPEAN PATENT APPLICATION**
published in accordance with Art. 153(4) EPC

(43) Date of publication:
**19.11.2025 Bulletin 2025/47**

(21) Application number: **23920952.1**

(22) Date of filing: **29.12.2023**

(51) International Patent Classification (IPC):
**H04L 1/00** (2006.01)

(52) Cooperative Patent Classification (CPC):
**H04L 1/00**

(86) International application number:
**PCT/CN2023/143528**

(87) International publication number:
**WO 2024/164763 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.02.2023 CN 202310125012**

(71) Applicant: **ZTE Corporation**
**Shenzhen, Guangdong 518057 (CN)**

(72) Inventors:
• **LI, Liguang**
**Shenzhen, Guangdong 518057 (CN)**

• **XU, Jin**
**Shenzhen, Guangdong 518057 (CN)**
• **LIANG, Chulong**
**Shenzhen, Guangdong 518057 (CN)**
• **YU, Guanghui**
**Shenzhen, Guangdong 518057 (CN)**
• **FU, Qiang**
**Shenzhen, Guangdong 518057 (CN)**
• **KANG, Jian**
**Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **DATA TRANSMISSION METHOD, COMMUNICATION APPARATUS, AND STORAGE MEDIUM**

(57) A data transmission method, a communication apparatus, and a storage medium, which relate to the technical field of communications, and are used for improving the error correction performance of communications. The data transmission method comprises: performing error correction coding on a first bit sequence to obtain a second bit sequence; on the basis of the second bit sequence, obtaining a third bit sequence stored in a circular buffer, wherein a target subsequence in the third bit sequence is obtained by performing interleaving processing on a second subsequence in the second bit sequence on the basis of a first subsequence in the second bit sequence, and the length of the first subsequence is an integer greater than 0; performing bit selection on the third bit sequence to obtain a fourth bit sequence having a matched rate; and sending the fourth bit sequence to a second transmission node.

Perform error correction coding on a first bit sequence to obtain a second bit sequence — S101

On the basis of the second bit sequence, obtain a third bit sequence stored in a circular buffer, wherein a target subsequence in the third bit sequence is obtained by performing interleaving processing on a second subsequence in the second bit sequence on the basis of a first subsequence in the second bit sequence, and the length of the first subsequence is an integer greater than 0 — S102

Perform bit selection on the third bit sequence to obtain a fourth bit sequence having a matched rate — S103

Send the fourth bit sequence — S104

FIG. 2

**Description**

The present disclosure claims a priority of Chinese patent application No. 202310125012.6, filed on February 09, 2023, the entire content of which is incorporated into this application by reference.

TECHNICAL FIELD

The present disclosure relates to the field of communication technologies, and in particular, to a data transmission method, a communication apparatus and a storage medium.

BACKGROUND

With the development of industries such as intelligent transportation, intelligent industrial control, and intelligent logistics, etc., when data is transmitted between different user equipments in a wireless communication network, there are very high requirements for at least one of performances as follows: data transmission rate, throughput, reliability, and latency, for example, performance requirements of ultra-low latency and ultra-high reliability.

In order to satisfy the above-mentioned relatively high performance requirements, in the related art, some redundant information is added to the data to be transmitted, through channel encoding, and in this way, a receiving end may recover the data to be transmitted by the redundant information, thereby eliminating some distortion caused in the data transmission process and improving the performance of the data transmission. However, the above-mentioned method has little effect on eliminating the distortion, and cannot better improve the performance of the data transmission, so that the method has a relatively low error correction performance, thereby resulting in the poor robustness of the wireless communication network.

SUMMARY

The embodiments of the present disclosure provide a data transmission method, a communication apparatus, and a storage medium, so as to improve the error correction performance of communication.

In an aspect, a data transmission method is provided, and includes: performing error correction encoding on a first bit sequence to obtain a second bit sequence; obtaining a third bit sequence stored in a circular buffer based on the second bit sequence, where a target subsequence in the third bit sequence is obtained by performing interleaving processing on a second subsequence in the second bit sequence based on a first subsequence in the second bit sequence, and a size of the first subsequence is an integer greater than 0; performing bit selection on the third bit sequence to obtain a fourth bit sequence; and sending the fourth bit sequence.

In another aspect, a data transmission method is provided, and includes: receiving a fourth bit sequence, where the fourth bit sequence is obtained by performing bit selection on a third bit sequence stored in a circular buffer, a target subsequence in the third bit sequence is obtained by performing interleaving processing on a second subsequence in a second bit sequence based on a first subsequence in the second bit sequence, and the second bit sequence is obtained by performing error correction encoding on a first bit sequence; and performing error correction decoding on the fourth bit sequence based on information of the first subsequence.

In yet another aspect, a first transmission node is provided, and the first transmission node includes: an encoding module, configured to perform error correction encoding on a first bit sequence to obtain a second bit sequence, obtain a third bit sequence stored in a circular buffer based on the second bit sequence, where a target subsequence in the third bit sequence is obtained by performing interleaving processing on a second subsequence in the second bit sequence based on a first subsequence in the second bit sequence, and perform bit selection on the third bit sequence to obtain a fourth bit sequence; and a sending module, configured to send the fourth bit sequence.

In yet another aspect, a second transmission node is provided, and the second transmission node includes: a receiving module, configured to receive a fourth bit sequence, where the fourth bit sequence is obtained by performing bit selection on a third bit sequence stored in a circular buffer, a target subsequence in the third bit sequence is obtained by performing interleaving processing on a second subsequence in a second bit sequence based on a first subsequence in the second bit sequence, and the second bit sequence is obtained by performing error correction encoding on a first bit sequence; and a decoding module, configured to perform error correction decoding on the fourth bit sequence based on information of the first subsequence.

In yet another aspect, a communication apparatus is provided, and includes: a memory and a processor; the memory is coupled with the processor; the memory is configured to store a computer program; and the processor, when executing the computer program, implements the data transmission method described in any of the above-mentioned embodiments.

In yet another aspect, a computer-readable storage medium is provided, the computer-readable storage medium has computer program instructions stored thereon, and the computer program instructions, when executed by a computer (e.g., a communication apparatus, a first transmission node or a second transmission node), implement the data transmission method described in any of the above-mentioned embodiments.

In yet another aspect, a computer program product is provided, the computer program product includes computer program instructions, and the computer program instructions, when executed by a processor, implement the data transmission method described in any of the above-mentioned embodiments.

In the embodiments of the present disclosure, error correction encoding is performed on data to be transmitted, redundant information is added into the data to be transmitted, and data with the added redundant information (e.g., a second bit sequence) is obtained. Furthermore, interleaving processing is performed on a subsequence in the data with the added redundant information, so that the data is less likely to undergo consecutive abrupt changes during the data transmission, thereby improving the error correction performance of communication.

BRIEF DESCRIPTION OF THE DRAWINGS

In order to explain the technical solutions in the present disclosure more clearly, the drawings that need to be used in some embodiments of the present disclosure will be introduced briefly below, and it is obvious that the drawings in the following description are merely drawings of some embodiments of the present disclosure, and for those ordinary skilled in the art, other drawings may also be obtained according to these drawings.

FIG. 1 is a physical model diagram of a communication system provided in some embodiments of the present disclosure.
FIG. 2 is a first flowchart of a data transmission method provided in some embodiments of the present disclosure.
FIG. 3 is a schematic diagram of an implementation of interleaving processing based on circular shift provided in some embodiments of the present disclosure.
FIG. 4 is a schematic diagram of an implementation of block interleaving provided in some embodiments of the present disclosure.
FIG. 5 is a first schematic diagram of an implementation process of a data transmission method provided in some embodiments of the present disclosure.
FIG. 6 is a second schematic diagram of an implementation process of a data transmission method provided in some embodiments of the present disclosure.
FIG. 7 is a third schematic diagram of an implementation process of a data transmission method provided in some embodiments of the present disclosure.
FIG. 8 is a fourth schematic diagram of an implementation process of a data transmission method provided in some embodiments of the present disclosure.
FIG. 9 is a fifth schematic diagram of an implementation process of a data transmission method provided in some embodiments of the present disclosure.
FIG. 10 is a sixth schematic diagram of an implementation process of a data transmission method provided in some embodiments of the present disclosure.
FIG. 11 is a schematic diagram of a performance analysis situation provided in some embodiments of the present disclosure.
FIG. 12 is a second flowchart of a data transmission method provided in some embodiments of the present disclosure.
FIG. 13 is a structural schematic diagram of a first transmission node provided in some embodiments of the present disclosure.
FIG. 14 is a structural schematic diagram of a second transmission node provided in some embodiments of the present disclosure.
FIG. 15 is a structural schematic diagram of a communication apparatus provided in some embodiments of the present disclosure.

DETAILED DESCRIPTION

The technical solutions in the present disclosure will be described below clearly and completely, in conjunction with the drawings in the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

It should be noted that in the present disclosure, terms such as "exemplary (exemplarily)" or "for example (such as, e.g.)" are used to represent examples, illustrations, or descriptions. Any embodiment or design solution described with "exemplary (exemplarily)" or "for example (such as, e.g.)" in the present disclosure should not be interpreted as being more preferred or advantageous than other embodiments or design solutions. Specifically, the use of the terms such as "exemplary (exemplarily)" or "for example (such as, e.g.)", etc., is intended to present related concepts in a specific manner.

Hereinafter, the terms such as "first", "second", etc., are used only for descriptive purposes and cannot be construed as indicating or implying relative importance or implicitly indicating the number of the indicated technical features. Thus, features limited with "first", "second" may explicitly or implicitly include one or more of the features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represents three cases: only A, A and B, and only B. Additionally, "at least one" means one or more, and "multiple/plurality of" means two or more..

As described in the background, with the development of industries such as intelligent transportation, intelligent industrial control, and intelligent logistics, etc., when data is transmitted between different user equipments in a wireless communication network, there are very high requirements for at least one of performances as follows: data transmission rate, throughput, reliability, and latency, for example, performance requirements of ultra-low latency and ultra-high reliability.

In order to satisfy the above-mentioned relatively high performance requirements, a data transmission method in the related art is that: a sending end performs channel encoding on data to be transmitted to obtain a bit sequence, maps the bit sequence into a constellation modulation symbol and transmits the constellation modulation symbol to a receiving end. Accordingly, the receiving end performs channel decoding on the received constellation modulation symbol, to recover the data to be transmitted. Due to the influence of factors, such as multipath, noise, interference, etc., on the transmitted data in the data transmission channel, it may result in the occurrence of errors in the data to be transmitted. The sending end adds some redundant information to the data to be transmitted through the channel encoding, so that the receiving end may recover the data to be transmitted by the redundant information, thereby eliminating some distortion caused during the data transmission.

However, the above-mentioned method has little effect on eliminating the distortion, and cannot better improve the performance of the data transmission, so that the method has a relatively low error correction performance, thereby resulting in the poor robustness of the wireless communication network.

In view of this, the embodiments of the present disclosure provide a data transmission method, and a core idea of the method is: adding redundant information into data to be transmitted, by performing error correction encoding on the data to be transmitted, so as to obtain data with the added redundant information (e.g., a second bit sequence). Furthermore, the interleaving processing is performed on a subsequence in the data with the added redundant information, so that the data is less likely to undergo consecutive abrupt changes during the data transmission, thereby improving the error correction performance of communication.

The application scenarios of the technical solutions provided in the embodiments of the present disclosure are introduced below specifically.

The data transmission method provided in the embodiments of the present application may be applied to systems of many communication standards. For example, the systems to which the embodiments of the present disclosure may be applicable include but are not limited to: a long term evolution (LTE) systems, various versions based on LTE evolution, a fifth generation (5G) system, or a next generation communication system, such as a new radio (NR), etc. In addition, the data transmission method provided in the embodiments of the present disclosure may also be applicable to future-oriented communication technologies, etc.

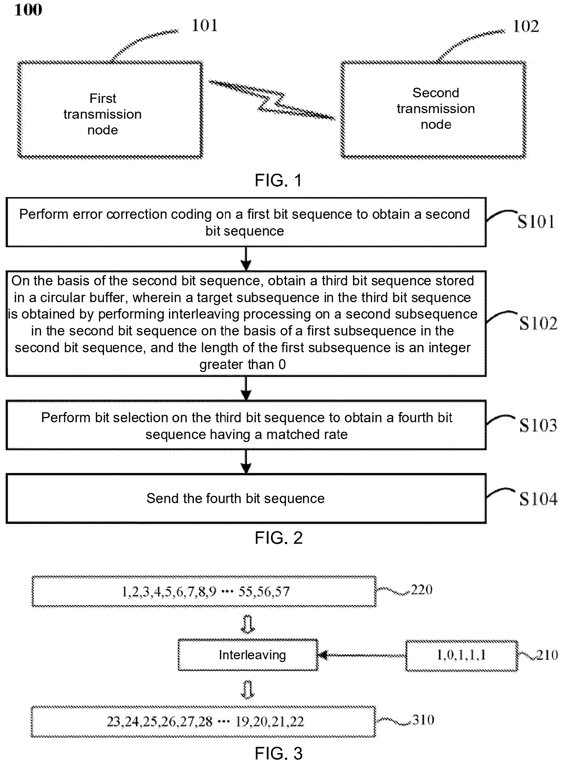

In order to explain the solutions more clearly, FIG. 1 provides a physical model diagram of a communication system.

Referring to FIG. 1, a communication system 100 includes a first transmission node 101 and a second transmission node 102.

The first transmission node 101 is a sending end or a receiving end for data, and is used to send or receive the data. Optionally, the first transmission node 101 may perform the data transmission method provided in the embodiments of the present disclosure. In addition, the first transmission node may be a terminal device, a base station or other network devices. For example, the first transmission node may include or be referred to as by those skilled in the art, a mobile station, a user station, a mobile unit, a user unit, a wireless unit, a remote unit, a mobile device, a wireless device, a wireless communication device, a remote device, a user equipment station, an access terminal, a mobile terminal, a wireless terminal, a remote terminal, a handheld apparatus, a user agent, a mobile client, a client, a passive tap, or certain other appropriate terms. Additionally, the first transmission node may also be a cellular phone, a personal digital assistant (PDA), a wireless modem, a wireless communication device, a handheld device, a tablet computer, a laptop computer, a cordless phone, a wireless local loop (WLL) station, etc. Various types of terminal devices may communicate with various types of base stations and network devices (including macro eNBs, small cell eNBs, relay base stations, etc.). The embodiments of the present disclosure does not specifically limit thereto.

The second transmission node 102 is a sending end or a receiving end for data. Similarly, the second transmission node 102 may be a terminal device, a base station or other network devices, which may refer to the above description of the first transmission node 101 specifically, and will not be repeated herein.

In some embodiments, in a case where the first transmission node 101 is a sending end, the second transmission node 102 is a receiving end; or, in a case where the first transmission node 101 is a receiving end, the second transmission node 102 is a sending end. The communication process of the communication system 100 is explained in detail below by taking an example in which the first transmission node 101 is a sending end and the second transmission node 102 is a receiving end.

In some examples, the first transmission node 101 may perform source encoding, channel encoding (also referred to as error correction encoding), and frequency modulation on data to be sent, and then send the data to the second transmission node 102. Accordingly, the second transmission node 102 may perform corresponding demodulation, channel decoding, source decoding, etc., on the received data. In addition, after receiving the data, the second transmission node 102 may also first perform de-noising or amplification processing, etc., on the received data, to acquire more accurate data, thereby improving the reliability of communication.

In some examples, when performing the channel encoding, the first transmission node 101 may support one or more of the following encoding modes: Low Density Parity Check Code (LDPC) encoding, Turbo encoding, Polar encoding, or convolutional encoding.

In some examples, the first transmission node 101 and the second transmission node 102 may also support Hybrid Automatic Repeat Request (HARQ) and support Incremental Redundancy (IR) merging.

In some examples, in a case where the second transmission node 102 fails in decoding, the second transmission node 102 may store the received data, and request the first transmission node 101 to retransmit the data. Accordingly, the first transmission node 101 may send retransmission data to the second transmission node 102, after receiving the request.

Furthermore, after receiving the retransmission data, the second transmission node 102 may merge the received retransmission data and the previously received data and then perform decoding. Since the retransmission data contains additional redundant bits (bits not in the initial transmission data), the retransmission has a certain diversity gain, which reduces a number of retransmissions and then reduces the latency.

It should be understood that the physical model, system architecture, and scenarios of the communication system described in the embodiments of the present disclosure are intended to explain the technical solutions of the embodiments of the present disclosure more clearly, and do not constitute a limitation on the technical solutions provided in the embodiments of the present disclosure, and those ordinary skilled in the art can know that with the evolution of network architectures and the emergence of new service scenarios, the technical solutions provided in the embodiments of the present disclosure are also applicable to similar technical problems.

The technical solutions in the present disclosure will be explained specifically below in conjunction with the drawings.

FIG. 2 is a flowchart of a data transmission method provided in the embodiments of the present disclosure, and the method may be performed by the above-mentioned first transmission node, second transmission node or other devices with a data processing function. The method is explained specifically below by taking an example in which an execution body is the first transmission node. Referring to FIG. 2, the data transmission method includes step S101 to step S104.

In S101, perform error correction encoding on a first bit sequence to obtain a second bit sequence.

In some embodiments, the first bit sequence includes at least valid information bits. For example, the first bit sequence may include only valid information bits; for another example, the first bit sequence may include valid information bits and a padding sequence.

In some embodiments, the valid information bits are composed of an information sequence and a cyclic redundancy check (CRC) check sequence. In some examples, since the information sequence may be encoded into a transmission block upon being transmitted, it may also be considered that the valid information bits may be composed of the transmission block and the CRC, which is not limited specifically in the present disclosure.

In some examples, a CRC check sequence is added to a transmission block to be transmitted, so as to obtain a bit sequence to be segmented into code blocks. When the bit sequence to be segmented into code blocks is segmented into code blocks, and if there is only one code block, the information sequence is the bit sequence to be segmented into code blocks. For another example, when the bit sequence to be segmented into code blocks is segmented into code blocks, and if there are more than one code blocks, the information sequence is sub-blocks obtained from code block segmentation. A size of the transmission block (transport block size, TBS) is an integer greater than 0, and a size of the CRC check sequence is an integer greater than 0.

The first bit sequence may be a bit sequence input into the error correction encoding, and a size of the first bit sequence is an integer greater than 0. The second bit sequence is a bit sequence that is output through the error correction encoding, and a size of the second bit sequence is an integer greater than 0.

In addition, it should be understood that the error correction encoding is also referred to as channel encoding, and is used to add a supervisory symbol to the data to be sent, so that it has the capability to detect errors or correct errors, thereby improving the reliability of communication.

In some embodiments, the error correction encoding is performed on the first bit sequence with a size K, to obtain the second bit sequence with a size N, where both K and N are integers greater than 1.

In some embodiments, the error correction encoding may include systematic encoding, or non-systematic encoding. In a case where the systematic encoding is performed on the first bit sequence, the second bit sequence includes consecutive first bit sequences.

Exemplarily, step S101 may be specifically implemented as: performing systematic encoding on the first bit sequence, calculating redundancy check bits of the first bit sequence, and merging the first bit sequence and the redundancy check bits of the first bit sequence into the second bit sequence. The redundancy check bits (also referred to as check bits) of the first bit sequence may assist the receiving end corresponding to the first transmission node to correct errors or detect errors in the first bit sequence. In addition, in a case where the systematic encoding is used, the decoding efficiency of the receiving end corresponding to the first transmission node may be improved.

In some embodiments, before the error correction encoding is performed on the first bit sequence, bit padding may be performed on the first bit sequence, so that a bit number of the first bit sequence is equal to a systematic bit number of the error correction encoding.

In some embodiments, the first transmission node may perform the error correction encoding on the first bit sequence based on LDPC encoding, Turbo encoding, Polar encoding, or convolutional encoding.

LDPC encoding is defined by a sparse (or low-density) parity check matrix, and may improve decoding performance by iterative decoding (e.g., using belief propagation decoding).

Turbo encoding is a parallel concatenated convolutional code, which is composed of two or more component codes in parallel, and the output of the Turbo encoding may be a systematic code. Optionally, the Turbo encoding may be a Turbo encoding method defined in an LTE (Long Term Evolution) system, which includes 2-way component codes and systematic bits, and a mother code rate is 1/3.

Polar encoding, i.e., a polarization code, is a linear block code proposed based on a channel polarization theory. Optionally, the Polar encoding is defined by an n-order Kronecker product of a matrix G, where the matrix G is a matrix with 2 rows and 2 columns. Optionally, the matrix G may be written in the following form G=[1 0; 1 1]. Optionally, for the Polar encoding, an n0-bit encoded bit sequence may be output for every input of 1 information bit, where n0 is a positive integer. For example, n0 may be equal to 1, 2, 4, 8, or 16.

Taking LDPC encoding as an example, step S101 may be specifically implemented as: based on a parity check matrix, performing the error correction encoding on the first bit sequence to obtain the second bit sequence, where the parity check matrix is determined by a lifting size and a base matrix.

In some examples, the parity check matrix includes a plurality of sub-matrix blocks, and each sub-matrix block is an identity matrix or an all-zero square matrix. Each element of the base matrix corresponds to a sub-matrix block, and the base matrix includes elements of two types: an element indicating circular shift of the identity matrix and an element indicating an all-zero square matrix. The lifting size is used to indicate a dimension number of the identity matrix and a dimension number of the all-zero square matrix, and the lifting size is a positive integer.

In some examples, in a case where the lifting size is Z, when an element in the base matrix is any one of -1, a negative value, an empty value, or null, the sub-matrix block corresponding to the element is an all-zero square matrix with the dimension of Z*Z; and when an element in the base matrix is greater than or equal to 0, the sub-matrix block corresponding to the element is an identity matrix with the dimension of Z*Z, and a specific value of the element is used to indicate a circular shift value of the identity matrix, i.e., a bit number of the circular shift of the identity matrix. The circular shift value of the identity matrix is generally described by using an integer, and its specific value directly describes how many bits the identity matrix is to be cyclically shifted. The element of the all-zero square matrix is generally represented by using any one of -1, a negative value, an empty value, or null.

For example, it is assumed that a base matrix h0 (with 2 rows and 3 columns) of a parity check matrix is:

$$h0 = \begin{bmatrix} -1 & 0 & 2 \\ 0 & 1 & -2 \end{bmatrix}.$$

In a case where the lifting size is 3, the parity check matrix H corresponding to h0 is:

$$H = \begin{bmatrix} 0 & 0 & 0 & 1 & 0 & 0 & 0 & 0 & 1 \\ 0 & 0 & 0 & 0 & 1 & 0 & 1 & 0 & 0 \\ 0 & 0 & 0 & 0 & 0 & 1 & 0 & 1 & 0 \\ 1 & 0 & 0 & 0 & 1 & 0 & 0 & 0 & 0 \\ 0 & 1 & 0 & 0 & 0 & 1 & 0 & 0 & 0 \\ 0 & 0 & 1 & 1 & 0 & 0 & 0 & 0 & 0 \end{bmatrix}.$$

In some examples, if the dimension of the base matrix is a*b and the lifting size is Z, the dimension of the parity check matrix corresponding to the base matrix is a*Z rows and b*Z columns. Exemplarily, taking an example in which the base matrix is 4 rows and 16 columns and the lifting size is 8, a size of the parity check matrix determined based on the above-mentioned base matrix and lifting size is 4*8 rows and 16*8 columns, i.e., 32 rows and 128 columns.

In some examples, columns of the parity check matrix include a systematic column and a check column, and a column number of systematic columns is equal to a difference value between a column number and a row number of the parity check matrix. For example, for a parity check matrix with a*Z rows and b*Z columns, the column number of systematic columns of the parity check matrix is equal to b*Z - a*Z, i.e., bZ - aZ. In the following, bZ is used to refer to b*Z and aZ is used to refer to a*Z, which are not repeated. A size of the first bit sequence is equal to the column number of systematic columns of the parity check matrix, i.e., bZ - aZ.

In some examples, the error correction encoding is performed on the first bit sequence based on the parity check matrix, to obtain the second bit sequence. A size of the second bit sequence is equal to the column number of the parity check matrix.

In some examples, the second bit sequence includes a systematic bit sequence and a check bit sequence.

In some examples, the systematic bit sequence of the second bit sequence obtained by encoding based on the parity check matrix corresponds to the systematic columns of the parity check matrix, and the check bit sequence of the second bit sequence corresponds to the check columns of the parity check matrix.

For example, for the parity check matrix of H=[Hs, Hp], a matrix composed of the systematic columns is Hs, and a matrix composed of the check columns is Hp. The second bit sequence generated based on the parity check sequence is C=[S; P], where S is the systematic bit sequence, all bits in S may be referred to as systematic bits, and P is the check bit sequence, all bits in P may be referred to as check bits. According to the error correction encoding rule, H×C=0 is satisfied, where 0 is an all-zero vector with a size equal to the row number of H; thus, H×C=[Hs, Hp]×[S; P]=Hs×S+Hp×P=0. It can be seen that the systematic bit sequence in the second bit sequence corresponds to the systematic columns in the parity check matrix; and the check bit sequence in the second bit sequence corresponds to the check columns in the parity check matrix. In an example, the first bit sequence is the systematic bit sequence.

In some examples, for the parity check matrix with a size of aZ rows and bZ columns, the parity check matrix may correspond to a base matrix with a size of a rows and b columns, the lifting size is Z, the systematic columns of the parity check matrix is composed of first bZ-aZ columns, and indexes corresponding to the systematic columns may be {0, 1, 2, ..., bZ-aZ-1}; and the check columns of the parity check matrix are composed of last aZ columns, and indexes corresponding to the check columns may be {bZ-aZ, bZ-aZ+1, ..., bZ-1}. Exemplarily, taking an example in which the lifting size is Z=11 and the dimension of the base matrix is 42 rows and 52 columns, the parity check matrix with a size of 462 rows and 572 columns may be determined based on the lifting size and the base matrix; and in the parity check matrix with 462 rows and 572 columns, the indexes of the systematic columns are {0, 1, ..., 109}, and the indexes of the check columns are {110, 111, ..., 571}. Accordingly, in the second bit sequence obtained by the error correction encoding, the index of the systematic bit sequence is {0, 1, ..., 109}, and the index of the check bit sequence is {110, 111, ..., 571}.

In some examples, the parity check matrix, the first bit sequence, and the second bit sequence satisfy the following relationship: $\mathbf{H} \times \mathbf{C} = 0$, C = [S; P], and V∈S. H is used to represent the parity check matrix, C is used to represent the second bit sequence, V is used to represent the first bit sequence, S is used to represent the systematic bit sequence of the second bit sequence, P is used to represent the check bit sequence of the second bit sequence, and the first bit sequence V is a subset of the systematic bit sequence S of the second bit sequence C. The size of the first bit sequence is equal to a size of the systematic bit sequence.

In some examples, the first bit sequence is determined by a transmission block. Specifically, the transmission block is segmented into code blocks to obtain an information sequence, and the first bit sequence is composed of the information sequence and the CRC check sequence. The transmission block size (TBS) may be referred to as a size of the transmission block, the transmission block size is an integer greater than 0, and a size of the CRC check sequence is an integer greater than 0.

In an optional specific example, the transmission block size is a positive integer less than T1, where T1 is an integer greater than or equal to 64. In a specific example, T1 may be equal to 64, 96, 128, 176, 192, 200, 256, 292, 308, 400, 512, 544, 624, 1024, or 2048. That is, this data processing method is used in a case where the transmission block size is relatively small, so a better data transmission reliability gain may be obtained.

In a possible implementation, the size of the first bit sequence is less than T2, where T2 is an integer greater than or equal to 64. In a specific example, T2 may be equal to 64, 96, 128, 176, 192, 200, 256, 292, 308, 400, 512, 544, 560, 624, 640, 1024, or 2048.

In S102, obtain a third bit sequence stored in a circular buffer based on the second bit sequence, where a target subsequence in the third bit sequence is obtained by performing interleaving processing on a second subsequence in the second bit sequence based on a first subsequence in the second bit sequence.

For ease of understanding, the relevant concepts involved in step S102 are described below.

1. First subsequence

(1) Content of the first subsequence

In some embodiments, the first subsequence is composed of one or more consecutive bits in the second bit sequence. That is, the first subsequence is a consecutive subsequence in the second bit sequence.

It should be understood that when the first subsequence is the consecutive subsequence in the second bit sequence, when the interleaving processing is performed on the second subsequence based on the first subsequence, the first subsequence may be determined quickly from the second bit sequence without requiring too many addressing operations, thereby improving the processing efficiency of data. In addition, for the receiving end corresponding to the first transmission node, the decoding processing process at the receiving end may also be simplified, thereby improving the data processing efficiency.

In some embodiments, the first subsequence is the same as a subsequence in the first bit sequence, that is, the first bit sequence includes the first subsequence.

In some embodiments, the first subsequence does not include a padding bit. Exemplarily, in a case where there is a padding bit in the first bit sequence, the first subsequence does not include the padding bit.

In some embodiments, the first subsequence does not include a systematic punctured bit. The systematic punctured bit is a systematic bit that is never transmitted in the sent data, in the codeword output by the error correction encoding. In some examples, in the codeword with the error correction encoding, all systematic punctured bits may constitute a systematic punctured sequence.

For example, in a case where the systematic encoding is used in step S101, the second bit sequence includes the first bit sequence and the check sequence of the first bit sequence. Then, a subsequence may be extracted, as the first subsequence, from the first bit sequence included in the second bit sequence.

(2) Size of the first subsequence

In some embodiments, the size of the first subsequence is an integer greater than 0.

In some embodiments, the size of the first subsequence is less than a size of the second subsequence.

In some embodiments, a sum of the size of the first subsequence and the size of the second subsequence is less than or equal to the size of the second bit sequence.

In some embodiments, the size of the first subsequence is determined based on the size of the first bit sequence. Exemplarily, assuming that the size of the first bit sequence is K and the size of the first subsequence is L, the size L of the first subsequence is equal to an integer obtained by taking the logarithm of K with base 2 and then rounding down. That is, the size of the first subsequence satisfies the following relationship:

$$L = \left\lfloor \log_2(\mathrm{K}) \right\rfloor$$

where $\lfloor x \rfloor$ represents a maximum integer less than or equal to a real number *x*.

In some embodiments, the size of the first subsequence is determined based on a size of the valid information bits. Exemplarily, assuming that the size of the valid information bits is K' and the size of the first subsequence is L, the size L of the first subsequence is equal to an integer obtained by taking the logarithm of K' with base 2 and then rounding down. That is, the size of the first subsequence satisfies the following relationship:

$$L = \left\lfloor \log_2(\mathrm{K'}) \right\rfloor$$

where $\lfloor x \rfloor$ represents a maximum integer less than or equal to a real number *x*.

In some embodiments, the size of the first subsequence is determined by the lifting size. Specifically, the size of the first subsequence is equal to:

$$L = \left\lfloor \log_2(\mathrm{d} \cdot Z) \right\rfloor$$

where d is a positive integer, Z is the lifting size, and Z is an integer greater than 0. d may be equal to 1, 2, 3, 4, 5, 6, 7, 8, 9 or 10.

(3) Index of the first subsequence

In some embodiments, in a case where the error correction encoding uses LDPC encoding, an index in the second bit sequence of a head element of the first subsequence is equal to a non-negative integer multiple of the lifting size.

Exemplarily, the index in the second bit sequence of a head element of the first subsequence may be equal to 1*Z, 2*Z, 3*Z, 4*Z, 5*Z, 6*Z, or 7*Z, where Z is the lifting size.

For example, when the LDPC-based encoding mode is used for the error correction encoding in step S101, if the lifting size is equal to 16, the index in the second bit sequence of the head element of the first subsequence may be 16d, where d is a non-negative integer and 16d is less than the size of the second bit sequence. For example, the index in the second bit sequence of the head element of the first subsequence may be 16, 32, 48, ..., and so on. Optionally, d may be a preset constant.

For another example, when the LDPC-based encoding mode is used for the error correction encoding in step S101, if the parity check matrix is a low-density parity check code determined by the base matrix with 4 rows and 16 columns and the lifting size of 8, the corresponding size of the parity check matrix is 4*8 rows and 16*8 columns. In a specific example, the index in the second bit sequence of the head element in the first subsequence is equal to a positive integer multiple of the lifting size. For the low-density parity check code determined by the base matrix with 4 rows and 16 columns and the lifting size of 8, the size of the second bit sequence is 16*8=128 bits, and the index in the second bit sequence of the head element in the first subsequence may be equal to 2*8=16, 3*8=16, or 4*8=32.

In some embodiments, in a case where the error correction encoding uses LDPC encoding, the parity check matrix includes a systematic column and a check column, and each column in the parity check matrix corresponds to an index in the second bit sequence; and the index in the second bit sequence of an element in the first subsequence is equal to an index of the systematic column of the parity check matrix.

In some examples, a set of indexes in the second bit sequence of elements in the first subsequence is equal to a set of indexes of all systematic columns in the parity check matrix, or is a subset of the set of indexes of all systematic columns in the parity check matrix.

In some embodiments, indexes in the second bit sequence of L elements in the first subsequence are indexes of L columns with smallest column weights in the parity check matrix, L is the size of the first subsequence, and L is a positive integer. The column weight is used to represent the number of 1 in the column. For example, if the number of 1 in a first column of the parity check matrix is 2, the column weight of the first column is 2; and for another example, if the number of 1 in a fourth column of the parity check matrix is 3, the column weight of the fourth column is 3.

In some other embodiments, indexes in the second bit sequence of L elements in the first subsequence are indexes of L systematic columns with smallest column weights in the parity check matrix, L is the size of the first subsequence, and L is a positive integer.

(4) Determination mode for the first subsequence

In some embodiments, the first subsequence is determined based on one or more of: the second bit sequence, a preset size of the fourth bit sequence, a size of the first bit sequence, a size of valid information bits, a modulation order, a code rate, a number of resources, a high layer signaling, a user equipment type and a transmission block size.

Based on this, both the sending end and the receiving end (e.g., the first transmission node and the receiving end corresponding to the first transmission node) may clearly determine a location and size of the first subsequence in the second bit sequence, so that the sending end (e.g., the first transmission node) may extract the first subsequence and perform the interleaving processing on the second subsequence based on the first subsequence, and facilitate its receiving end to perform the decoding processing, thereby improving the reception processing efficiency.

In some embodiments, the first subsequence is determined according to: determining the first subsequence from the second bit sequence, based on the index in the second bit sequence of the head element of the first subsequence and the size of the first subsequence. Exemplarily, assuming that the index in the second bit sequence of the head element of the first subsequence is v, and the size of the first subsequence is L, the first subsequence may be obtained by extracting a v-th element to a (v+L-1)-th element from the second bit sequence.

In some embodiments, the indexes in the second bit sequence of the L elements in the first subsequence are determined according to the column weight of the parity check matrix. For example, taking a parity check matrix with a size of 60 rows and 120 columns as an example, column indexes corresponding to the column weight 2 in the parity check matrix is 64 to 119, column indexes corresponding to the column weight 3 in the parity check matrix is 32 to 63, column indexes corresponding to the column weight 5 in the parity check matrix is 20 to 31, and column indexes corresponding to the column weight 6 in the parity check matrix is 0 to 19; the indexes of the L columns with the lightest column weights in the parity check matrix are used as the indexes in the second bit sequence of the L elements in the first subsequence, and if L is 4, it may be determined that an index sequence in the second bit sequence of the L elements in the first subsequence is {64, 65, 66, 67}. Or, for example, the indexes of the L columns with the heaviest weights in the parity check matrix are used as the indexes in the second bit sequence of the L elements in the first subsequence, and if L is 5, it may be determined that an index sequence in the second bit sequence of the L elements in the first subsequence is {0, 1, 2, 3, 4}.

In a possible implementation, the parity check matrix is determined according to a base graph matrix, and then the error correction encoding is performed on the first bit sequence to obtain the second bit sequence. In an example, the base graph matrix is a second base graph matrix.

In some examples, the base graph matrix includes base graph matrices of two types, for example, including a first base graph matrix and a second base graph matrix, where a size of a base matrix corresponding to the first base graph matrix is 46 rows and 68 columns, and a size of a base matrix corresponding to the second base graph matrix is 42 rows and 52 columns. When at least one of the following condition 1 to condition 3 is satisfied, the parity check matrix is determined by the second base graph matrix: condition 1, the transmission block size is less than or equal to 292; condition 2, the transmission block size is less than or equal to 3824 and the code rate is lower than 0.67; and condition 3, the code rate is lower than 0.25. In a case where any one of the above-mentioned condition 1 to condition 3 is not satisfied, the parity check matrix is determined by the first base graph matrix. In a specific example, the base matrix corresponding to the first base graph matrix and the base matrix corresponding to the second base graph matrix are base matrices defined in the 3GPP standard protocol 38.212. It should be understood that with the development of the communication field, the base graph matrix may further include more types of base graph matrices, which is not limited specifically in the present disclosure.

In an example, when the base graph matrix is the second base graph matrix, the size of the first subsequence is greater than 0; and when the base graph matrix is the first base graph matrix, the size of the first subsequence is equal to 0. When the size of the first subsequence is equal to 0, the target subsequence in the third bit sequence is directly equal to the second subsequence in the second bit sequence, and it does not need to perform the interleaving operation.

In an embodiment, a row number of the base matrix is less than or equal to a preset row number threshold; or, a column number of the base matrix is less than or equal to a preset column number threshold; or, a systematic column number of the base matrix is less than or equal to a preset systematic column number threshold; or an encoding systematic column number is less than or equal to a fifth threshold. The systematic column number of the base matrix is equal to a difference value between the column number and the row number of the base matrix, and the encoding systematic column number is a positive integer less than or equal to the systematic column number of the base matrix, and the encoding systematic column number may be used to calculate the lifting size.

In some embodiments, the lifting size is less than or equal to a preset lifting size threshold. The preset lifting size threshold may be equal to 32, 48, 56, 64, 72, 80, 88, 96, 104 or 128.

Exemplarily, the above-mentioned preset row number threshold may be 42, and the preset column number threshold may be 52, and in this case, the base matrix may be the base matrix corresponding to the above-mentioned second base graph matrix. The preset systematic column number threshold may be equal to 10, and the fifth threshold may be equal to one of: 6, 8, 9, and 10. For example, the fifth threshold is equal to 6; or the fifth threshold is equal to 8; or the fifth threshold is equal to 9.

For example, assuming that the index in the second bit sequence of the head element of the first subsequence is 6 and the size of the first subsequence is 10, a bit sequence composed of a bit with an index 6 to a bit with an index 15 in the second bit sequence may be determined as the first subsequence.

2. Second subsequence

(1) Content of the second subsequence

In some embodiments, the second subsequence is composed of one or more consecutive bits in the second bit sequence. That is, the second subsequence is a consecutive subsequence in the second bit sequence.

It should be understood that when the second subsequence is the consecutive subsequence in the second bit sequence, when the interleaving processing is performed on the second subsequence based on the first subsequence, the second subsequence may be quickly determined from the second bit sequence without too many addressing operations, thereby improving the processing efficiency of data. In addition, for the receiving end corresponding to the first transmission node, a decoding processing process at the receiving end may also be simplified, thereby improving the data processing efficiency.

In some embodiments, the second subsequence does not include a padding bit. Exemplarily, in a case where there is a padding bit in the first bit sequence, the second subsequence does not include the padding bit.

In some embodiments, the second subsequence does not include a systematic punctured bit. The systematic punctured bit is a systematic bit that is never transmitted in the sent data, in the codeword output by the error correction encoding. In some examples, in the codeword with the error correction encoding, all systematic punctured bits may constitute a systematic punctured sequence.

(2) Size of the second subsequence

In some embodiments, the size of the second subsequence is an integer greater than 1.

In some embodiments, a sum of the size of the first subsequence and the size of the second subsequence is less than or equal to the size of the second bit sequence.

In some embodiments, the size of the second subsequence is equal to the size of the first bit sequence. For example, in a case where the systematic encoding is used in step S101, the second bit sequence includes the first bit sequence and the check sequence of the first bit sequence; and in a case where the first bit sequence included in the second bit sequence is determined as the second subsequence, the size of the second subsequence is equal to the size of the first bit sequence.

In some other embodiments, the size of the second subsequence is smaller than the size of the first bit sequence. For example, in a case where the systematic encoding is used in step S101, the second bit sequence includes the first bit sequence and the check sequence of the first bit sequence; and in a case where a subsequence of the first bit sequence included in the second bit sequence is determined as the second subsequence, the size of the second subsequence is less than the size of the first bit sequence. For another example, in a case where the non-systematic encoding is used in step S101, a subsequence with a size smaller than that of the first bit sequence may be extracted, as the second subsequence, from the second bit sequence; and in this case, the size of the second subsequence is smaller than the size of the first bit sequence.

It should be understood that if the size of the second subsequence is less than or equal to the size of the first bit sequence, it may be ensured that in a bit selection process, a fourth bit sequence after the bit selection includes the second subsequence, so that the error block rate performance of the initial transmission data may be ensured.

In some further embodiments, the size of the second subsequence is greater than the size of the first subsequence. For example, in a case where the systematic encoding is used when the error correction encoding is performed in step S101, the second subsequence may include the first bit sequence and a part or all of the check sequence of the first bit sequence. For another example, in a case where the non-systematic encoding is used when the error correction encoding is performed in step S101, a subsequence with a size greater than that of the first bit sequence may be extracted, as the second subsequence, from the second bit sequence. In this case, the size of the second subsequence is greater than the size of the first bit sequence.

It should be understood that when the size of the second subsequence is greater than the size of the first bit sequence, a transmission code rate of the data sent by the first transmission node may be improved, thereby improving the decoding efficiency at the receiving end corresponding to the first transmission node.

In some embodiments, the size of the second subsequence is less than or equal to the size of the second bit sequence minus the size of the first subsequence. For example, in a case where the second bit sequence includes only the first subsequence and the second subsequence, the size of the second subsequence is equal to the size of the second bit sequence minus the size of the first subsequence. For another example, in a case where the second bit sequence includes the first subsequence, the second subsequence and other sequences, the size of the second subsequence is less than the size of the second bit sequence minus the size of the first subsequence.

In some embodiments, the size of the second subsequence is determined based on the lifting size. Specifically, the size of the second subsequence is equal to: $d \cdot Z,$ where d is a positive integer, Z is the lifting size, and Z is an integer greater than 0. d may be equal to 1, 2, 3, 4, 5, or 6.

In some embodiments, the size of the second subsequence is determined based on at least one of: the size of the first subsequence, the size of the second bit sequence, the size of the first bit sequence, the size of the valid information bits, the column number of the base matrix, the lifting size, or the size of the systematic punctured sequence. All of the column number of the base matrix, the lifting size, and the size of the systematic punctured sequence are integers greater than 0. In addition, the specific determination method may refer to the descriptions in Example 1 to Example 13 as follows.

In some embodiments, the size of the second subsequence is determined based on the following parameters: the size of the first subsequence, and the code rate. The code rate is a real number greater than 0.8 and less than 1. In an example, the code rate is equal to a highest target code rate indicated in a modulation and coding scheme (MCS) table. The code rate may be equal to a maximum target code rate in the currently used MCS table indicated by a higher layer signaling. In an example, the code rate may be equal to a maximum value of maximum target code rates in all MCS tables. In an example, the code rate is at least equal to one of: 948/1024, 772/1024, or 0.95.

In a specific example, the size of the second subsequence is determined by the following formula: $f(K/R0)$, where

K is the size of the first subsequence, R0 is the code rate, and the function f(x) represents an integer obtained by rounding down, rounding up, or rounding for the real number x.

In some embodiments, the size of the second subsequence is determined based on the following parameters: the lifting size. The lifting size is an integer greater than 0. In a specific example, the size of the second subsequence is equal to Z*d, where Z is the lifting size and d is an integer greater than 0. In an example, d is greater than a parameter kb for LDPC encoding, where kb is less than or equal to the column number of systematic columns of the base matrix, where the column number of systematic columns of the base matrix is equal to a difference between the column number and the row number of the base matrix. In an example, the column number of systematic columns of the base matrix is equal to 10, and kb is determined by the transmission block size TBS, and for example, if TBS is less than or equal to 192, kb is equal to 6; if TBS is greater than 192 and TBS is less than or equal to 560, kb is equal to 8; if TBS is greater than 560 and TBS is less than or equal to 640, kb is equal to 9; and if TBS is greater than 640, kb is equal to 10. The lifting size is then determined by the parameter kb. In a specific example, d is equal to one of: kb, kb+1, kb+2, kb+3, and kb+4.

(3) Index of the second subsequence

In some embodiments, an index in the second bit sequence and corresponding to an element in the second subsequence is different from the index in the second bit sequence and corresponding to the element in the first subsequence. That is, an intersection set of an index set composed of the indexes in the second bit sequence of respective elements of the first subsequence and an index set composed of the indexes in the second bit sequence of respective elements of the second subsequence, is an empty set.

Exemplarily, the index set composed of the respective elements of the first subsequence in the second bit sequence is [0, 1, 2, 3, 4, 5], that is, the first subsequence occupies a 0-th bit to a 5-th bit of the second bit sequence. The index set composed of the respective elements of the second subsequence in the second bit sequence does not include any index in [0, 1, 2, 3, 4, 5]. For example, the index set composed of the respective elements of the second subsequence in the second bit sequence may be [6, 7, 8, ..., 63], that is, the second subsequence occupies a 6-th bit to a 63-rd bit of the second bit sequence. It can be seen that the intersection set of the index set [6, 7, 8, ..., 63] and the index set [0, 1, 2, 3, 4, 5] is an empty set. It should be understood that the specific values of the respective index elements in the index sets here are only examples, which is not limited specifically in the embodiments of the present disclosure.

(4) Determination mode of the second subsequence

In some embodiments, the second subsequence is determined according to: determining the second subsequence from the second bit sequence, based on an index in the second bit sequence of a head element of the second subsequence and the size of the second subsequence.

In some embodiments, the index in the second bit sequence of the head element of the second subsequence may be determined by the lifting size. In a specific example, the index in the second bit sequence of the head element of the second subsequence may be equal to d*Z, where d is a positive integer, and Z is the lifting size.

In some embodiments, the index in the second bit sequence of the head element of the second subsequence may be determined by the lifting size and the size of the second subsequence. In a specific example, the index in the second bit sequence of the head element of the second subsequence may be equal to d*Z+L, where d is a positive integer, Z is the lifting size, and L is the size of the second subsequence.

In some embodiments, the size of the second subsequence is equal to Z, and the index in the second bit sequence of the head element of the second subsequence is equal to d*Z, where d is a non-negative integer, and Z is the lifting size.

In some embodiments, the size of the second subsequence is equal to d1*Z, and the index in the second bit sequence of the head element of the second subsequence is equal to d2*Z, where d1 is a positive integer, d2 is a non-negative integer, and Z is the lifting size. d1 may be equal to 1, 2, 3, 4, or 5. Additionally, d2 may be equal to 1, 2, 3, 4, or 5.

3. Third bit sequence

(1) Content of the third bit sequence

In some embodiments, the third bit sequence includes a target subsequence.

Optionally, the third bit sequence includes the first subsequence. In this way, in a case where the third bit sequence includes the first subsequence, it may be enabled that the first subsequence participates in the bit selection in step S104, which facilitates the receiving end to directly determine the first subsequence, so as to facilitate decoding.

Optionally, the third bit sequence does not include the first subsequence. In this way, in a case where the third bit sequence includes the first subsequence, the transmission code rate of the data transmission may be improved, thereby improving the communication efficiency.

In addition, the third bit sequence may further include other types of sequences, e.g., a padding sequence or a systematic punctured sequence, etc.

(2) Size of the third bit sequence

In some embodiments, the size of the third bit sequence is determined by the size of the first subsequence.
In some embodiments, the size of the third bit sequence is equal to the size of the second bit sequence minus the size of the first subsequence.
In some embodiments, the size of the third bit sequence is less than the size of the second bit sequence minus the size of the first subsequence. For example, in a case where the third bit sequence does not include the first subsequence and the padding sequence, the size of the third bit sequence may be less than the size of the second bit sequence minus the size of the first subsequence.
In some embodiments, the size of the third bit sequence is equal to the size of the second bit sequence. For example, in a case where the third bit sequence includes the first subsequence and the padding sequence, the size of the third bit sequence may be equal to the size of the second bit sequence.
In some embodiments, the size of the third bit sequence is greater than or equal to the sum of the size of the first subsequence and the size of the second subsequence. For example, when the third bit sequence includes only the first subsequence and the second subsequence, the size of the third bit sequence is equal to the sum of the size of the first subsequence and the size of the second subsequence. For another example, when the third bit sequence includes the first subsequence, the second subsequence and other sequences (e.g., the systematic punctured sequence, the padding sequence or the check sequence of the first bit sequence), the size of the third bit sequence is greater than the sum of the size of the first subsequence and the size of the second subsequence.
In some embodiments, in a case where the error correction encoding is LDPC encoding, the size of the third bit sequence is equal to the size of the second bit sequence minus the size of the first subsequence and minus sZ. The s is a non-negative integer, and Z is the lifting size of the parity check matrix used in LDPC encoding. In an example, s is equal to 0, 1, or 2.
In some embodiments, in a case where the error correction encoding is LDPC encoding, the size of the third bit sequence is equal to the size of the second bit sequence minus sZ. The s is a non-negative integer, and Z is the lifting size of the parity check matrix used in LDPC encoding. In some examples, s is equal to 0, 1, or 2.

4. Target subsequence

(1) Content of the target subsequence

The target subsequence is a sequence obtained by performing the interleaving processing on the second subsequence in the second bit sequence based on the first subsequence in the second bit sequence.
In some embodiments, the target subsequence is composed of one or more consecutive bits in the third bit sequence. That is, the target subsequence is a consecutive subsequence in the third bit sequence.
It should be understood that when the target subsequence is the consecutive subsequence in the third bit sequence, the target subsequence may be quickly determined from the third bit sequence at the receiving end (e.g., the receiving end corresponding to the first transmission node) without too many addressing operations, thereby simplifying the decoding processing process at the receiving end and then improving the processing efficiency of data.

(2) Size of the target subsequence

In some embodiments, the size of the target subsequence is less than the size of the third bit sequence.
In some embodiments, the size of the target subsequence is equal to the size of the second subsequence.

(3) Location of the target subsequence

In some embodiments, the target subsequence is located at a header of the third bit sequence. Based on this, it is enabled that initial transmission data of the first transmission node includes the target subsequence as much as possible, and it should be understood that the initial transmission data containing the target subsequences in all third bit sequences as much as possible, may enable the transmission of the initial transmission data to have a relatively high performance; and it is also more convenient and simpler for the receiving end to perform the retransmission processing in a case of the loss of the initial transmission.
In some embodiments, a location in the third bit sequence of a head element of the target subsequence is equal to a starting location corresponding to a redundant version with an index 0. In this way, it may be enabled that the target subsequence is located at a header in the third bit sequence. In a specific example, the location in the third bit sequence of the head element of the target subsequence is equal to 0, and the starting location corresponding to the redundant version with the index 0 is also equal to 0.

(4) Determination mode of the target subsequence

In some embodiments, the target subsequence in the third bit sequence is obtained by performing the interleaving processing on the second subsequence in the second bit sequence based on an interleaving index sequence corresponding to the first subsequence.

5. Interleaving process

In some embodiments, the interleaving processing includes one or more of: a circular interleaving processing, interleaving processing based on an interleaving index sequence, or a block interleaving processing.
For ease of understanding, several interleaving processing modes involved in the embodiments of the present disclosure are described below briefly.

(1) Circular interleaving process

The circular interleaving processing includes at least one of: left circular shift interleaving, right circular shift interleaving, up circular shift interleaving, and down circular shift interleaving. Generally, the above-mentioned left circular shift interleaving and right circular shift interleaving are for a row vector sequence (i.e., a sequence in which elements in the sequence are placed in a row), while the up circular shift interleaving and the down circular shift interleaving are for a column vector sequence (i.e., a sequence in which elements in the sequence are placed in a column).
In some embodiments, in a case where the above-mentioned interleaving processing is the circular interleaving processing, the interleaving is performed on the second subsequence based on the first subsequence to obtain the target subsequence may be specifically implemented as: converting a binary sequence corresponding to the first subsequence into a decimal integer S, where the decimal integer S is used to represent the bit number of shift; and performing circular shift on the second subsequence according to the integer S to obtain an interleaved sequence. In some examples, performing the interleaving on the second subsequence according to the integer S may be specifically implemented as: performing left circular shift on the second subsequence by S bits; or performing right circular shift on the second subsequence by S bits. S is a non-negative integer.
In some embodiments, the error correction encoding is performed on the first bit sequence based on the parity check matrix, to obtain the second bit sequence; where the parity check matrix is determined by the lifting size and the base matrix. The interleaving processing includes: performing circular shift interleaving on Z bits in the second subsequence according to the first subsequence. The index in the second bit sequence of the head element of the Z bits in the second subsequence may be equal to c*Z, where c is a non-negative integer and Z is the lifting size. Or, the circular interleaving processing includes: performing circular shift interleaving on multiple bit groups in the second subsequence according to the first subsequence, respectively, where a size of each bit group is equal to Z, and the index in the second bit sequence of the head element of each bit group is equal to a non-negative integer multiple of the lifting size, and Z is the lifting size. In an example, the circular shift interleaving is performed on d1 bit groups in the second subsequence according to the first subsequence, respectively, and assuming that the size of each bit group is equal to Z, and the integer corresponding to the first subsequence is S, the bit number of the circular shift interleaving on an i-th bit group in the d1 bit groups is: $\mathrm{mod}(\mathrm{floor}(S/(Z^i)), Z)$; where $\mathrm{mod}(x1, x2)$ represents a remainder operation, for example, $\mathrm{mod}(11, 8) = 3$; $\mathrm{floor}(x1)$ represents a rounding down operation on a real number x, for example, $\mathrm{floor}(2.6) = 2$; $x1^{x2}$ represents x1 to the power of x2, for example, $7^2 = 49$. Since the circular shift interleaving operation is only performed within each bit group, an interleaving network in error correction decoding may be reused upon decoding, so that the decoding complexity can be reduced.
Exemplarily, assuming that the bit number of the first subsequence 210 is 5, and for the first subsequence [1 0 1 1 1], its corresponding integer is 23. As shown in FIG. 3, in a case where the left bit is a high bit and the right bit is a low bit, for the second subsequence 220 with 58 bits, if the left circular shift is used based on the first subsequence [1 0 1 1 1], a 23-rd bit of the second subsequence is a 0-th bit of the target subsequence 310 obtained through the interleaving processing, and a 24-th bit of the second subsequence is a 1-st bit of the target subsequence obtained through the interleaving processing. And so on, which will not be repeated.

(2) Interleaving processing based on the interleaving index sequence

In some embodiments, an index of an element in the interleaving index sequence corresponds to a first bit to be interleaved in the second subsequence, and a value of the element in the interleaving index sequence corresponds to a second bit in the target subsequence that needs to be interleaved with the first bit. The interleaving index sequence is used to exchange values of elements at corresponding positions of the second subsequence and the target subsequence. The interleaving index sequence is used to identify subscript values in the sequence before being interleaved (e.g., the second subsequence) of all elements of the interleaved sequence (e.g., the target subsequence). For example, F1=F0(A), F1 is the target subsequence, F0 is the second subsequence, A is the interleaving index sequence, that is, the i-th element of F1 is equal to the A(i)-th element of F0, i is equal to an integer from 0 to w-1, and w is the size of the second subsequence FO.

Exemplarily, assuming that the second subsequence includes [a1, a2, a3, a4], where the index in the second bit sequence of a1 is 0, the index in the second bit sequence of a2 is 1, the index in the second bit sequence of a3 is 2, and the index in the second bit sequence of a4 is 3, and the interleaving index sequence corresponding to the first subsequence is [3, 2, 0, 1], and then, an element with an index 3 in the second subsequence is set to an element with an index 0 in the target subsequence, an element with an index 2 in the second subsequence is set to an element with an index 1 in the target subsequence, an element with an index 0 in the second subsequence is set to an element with an index 2 in the target subsequence, and an element with an index 1 in the second subsequence is set to an element with an index 3 in the target subsequence; so the target subsequence is [a4, a3, a1, a2].

In some examples, two interleaving index sequences respectively corresponding to any two different first subsequences are different.

In some examples, in two interleaving index sequences respectively corresponding to any two different first subsequences, there are at most T elements at same locations with same values, where T is a positive integer. In an example, T is equal to 1, 2, 3, 4, or 5. In some examples, T is less than a first threshold.

In some examples, in two interleaving index sequences respectively corresponding to any two different first subsequences, there are at most W% elements at same locations with same values, where W is a real number greater than 0 and less than 20. In an example, W is equal to 0, 1, 2, 3, 4, or 5. For example, in a case where W is 1 and the size of the interleaving index sequence is 128, there are at most same elements at 2 index locations, in any 2 interleaving index sequences, that is, T is 2. In some examples, W is less than a second threshold.

It should be noted that if there are many elements with same values at same locations in multiple interleaving index sequences, a near-codeword problem will occur, that is, interleaving sequences output corresponding to different second bit sequences are completely the same, resulting in the problem that the receiving end cannot decode correctly or errors occur often. Therefore, when T is less than the first threshold or W is less than the second threshold, the number of elements with same values at same locations may be limited, thereby improving the decoding efficiency at the corresponding receiving end.

(3) Block interleaving process

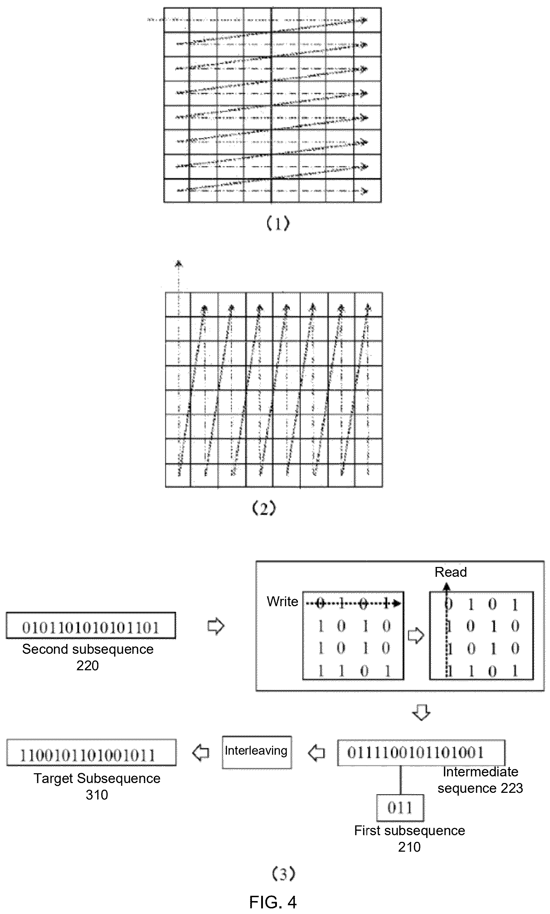

The block interleaving processing includes at least one of: writing by rows and reading by columns, and writing by columns and reading by rows. As shown in FIG. 4, if the block interleaving processing is writing by columns and reading by rows, the first transmission node writes in a direction indicated by an arrow in (1) in FIG. 4, and reads in a direction indicated by an arrow in (2) in FIG. 4. If the block interleaving processing is writing by columns and reading by rows, the first transmission node writes in a direction indicated by an arrow in (2) in FIG. 4, and reads in a direction indicated by an arrow in (1) in FIG. 4.

In some examples, in a case where the size of the second bit sequence is relatively large, a row number or a column number of the block interleaving is determined by the size of the second subsequence.

In some examples, a difference value between the row number and the column number of the block interleaving is not greater than 1. The row number of the block interleaving is the row number of the matrix written by the block interleaving, and the column number of the block interleaving is the column number of the matrix written, which will not be repeated below.

In some examples, assuming that the row number of the block interleaving is r and the column number is c, the row number r of the block interleaving is equal to an integer obtained by taking the logarithm of the size of the second subsequence with base 2 and then rounding down, that is, the row number r of the block interleaving satisfies the following relationship:

$$r = \left\lfloor \log_2(d) \right\rfloor$$

Furthermore, assuming that the size of the second subsequence is d, the column number of the block interleaving is a minimum integer greater than or equal to a real number obtained by dividing the size of the second subsequence *d* by the row number of the block interleaving, that is, the column number c of the block interleaving satisfies the following relationship:

$$c = \lceil d/r \rceil.$$

In some other examples, assuming that the row number of the block interleaving is *r* and the column number is c, the column number c of the block interleaving is equal to an integer obtained by the logarithm of the size of the second subsequence with base 2 and then rounding down, that is, the column number c of the block interleaving satisfies the following relationship:

$$c = \lfloor \log_2(d) \rfloor.$$

Furthermore, assuming that the size of the second subsequence is d, the row number of the block interleaving is a minimum integer greater than or equal to a real number obtained by dividing the size of the second subsequence by the column number of the block interleaving, that is, the row number r of the block interleaving satisfies the following relationship:

$$r = \lceil d/c \rceil.$$

In addition, after the block interleaving is completed, the circular shift interleaving is performed on the block-interleaved sequence according to the first subsequence, to obtain the target subsequence. That is, the interleaving may be implemented by combining multiple interleaving processing modes.

Exemplarily, as shown in (3) of FIG. 4, (3) of FIG. 4 shows an implementation of interleaving processing combining the block interleaving and the circular shift. The block interleaving operation is performed on a second subsequence 220 first, to obtain an intermediate sequence 223, and then the circular shift interleaving is performed on the intermediate sequence according to the first subsequence 210, to obtain a target subsequence 310. The size of the first subsequence of (3) in FIG. 4 is 3, and its corresponding integer value is 3, so the corresponding circular shift is 3 bits.

In S103, perform bit selection on the third bit sequence to obtain a fourth bit sequence.

In some embodiments, a size of the fourth bit sequence is greater than the size of the valid information bits. In this way, the transmission code rate may be ensured to be a positive real number less than 1, so that the receiving end can correctly decode the original data (e.g., the valid information bits). The transmission code rate is generally equal to a ratio of the size of the valid information bits to the size of the fourth bit sequence.

In some embodiments, the fourth bit sequence does not include the first subsequence, that is, the first subsequence is transmitted implicitly. Based on this, the efficiency of data transmission may be improved and the transmission power consumption may be reduced.

In some embodiments, step S103 is specifically implemented as: performing the bit selection on the third bit sequence based on the redundant version, to obtain the fourth bit sequence. For example, a starting location for the bit selection from the third bit sequence may be determined according to the redundant version, and circular selection may be performed starting from the starting location of the third bit version.

In some examples, the redundant version includes at least one of: a 0-th redundant version (RV0), a 1-st redundant version (RV1), a 2-nd redundant version (RV2), and a 3-rd redundant version (RV3). The redundant version is used to determine the starting location for the bit selection from the third bit sequence, and then the bit selection is started from the starting location. If the bit selection needs to be continued when a tail bit of the third bit sequence has been selected, the selection is performed from a head address of the third bit sequence, to obtain the fourth bit sequence.

In some examples, the starting location corresponding to the 0-th redundant version (RV0) is 0, the starting location corresponding to the 1-st redundant version (RV1) is 13×Z, the starting location corresponding to the 2-nd redundant version (RV2) is 25×Z, and the starting location corresponding to the 3-rd redundant version (RV3) is 43×Z, where Z is the lifting size and Z is a positive integer. As a specific example, the 0-th redundant version (RV0) may be used for the initial data transmission of the first transmission node.

In some examples, the error correction encoding is performed on the first bit sequence based on the parity check matrix, to obtain the second bit sequence; where the parity check matrix is determined by the lifting size and the base matrix. The base matrix is determined by the base graph matrix, where the base graph matrix includes: a first base graph matrix and/or a second base graph matrix. A size of a base matrix corresponding to the first base graph matrix is 46 rows and 68 columns, including 8 base matrices, and indexes $i_{LS}$ corresponding to respective base matrices are 0 to 7, respectively; and a size of a base matrix corresponding to the second base graph matrix is 42 rows and 52 columns, also including 8 base matrices, and indexes $i_{LS}$ corresponding to respective base matrices are 0 to 7, respectively.

As an example, in a case where at least one of the following condition 1 to condition 3 is satisfied, the parity check matrix is determined by the second base graph matrix: condition 1, the transmission block size is less than or equal to 292; condition 2, the transmission block size is less than or equal to 3824 and the code rate is lower than 0.67; and condition 3, the code rate is lower than 0.25. As another example, in a case where any one of the above-mentioned condition 1 to condition 3 is not satisfied, the parity check matrix is determined by the first base graph matrix. In a specific example, the base matrix corresponding to the first base graph matrix and the base matrix corresponding to the second base graph matrix are base matrices defined in the 3GPP standard protocol 38.212.

In a specific example, the lifting size of the check matrix belongs to an element in 8 lifting size subsets, and indexes $i_{LS}$ of the 8 lifting size subsets are 0 to 7, respectively, as shown in Table 1. If it is determined that the first base graph matrix is used for LDPC encoding, the index $i_{LS}$ is determined according to the lifting size, and then the parity check matrix is determined by the $i_{LS}$-th base matrix of the first base graph matrix and the lifting size. For example, if the lifting size Z is equal to 120, the index $i_{LS}$ = 7, and the parity check matrix is determined by the $i_{LS}$ = 7-th base matrix of the first base graph matrix and the lifting size Z = 120. If it is determined that the second base graph matrix is used for LDPC encoding, the index $i_{LS}$ is determined according to the lifting size, and then the parity check matrix is determined by the $i_{LS}$-th base matrix of the second base graph matrix and the lifting size. For example, if the lifting size Z is equal to 24, the index $i_{LS}$ =1, and the parity check matrix is determined by the $i_{LS}$ =1-th base matrix of the second base graph matrix and the lifting size Z=24.

Table 1

| Index ($i_{LS}$) | Lifting size subset ($Z$) |
|---|---|
| 0 | {2, 4, 8, 16, 32, 64, 128, 256} |
| 1 | {3, 6, 12, 24, 48, 96, 192, 384} |
| 2 | {5, 10, 20, 40, 80, 160, 320} |
| 3 | {7, 14, 28, 56, 112, 224} |
| 4 | {9, 18, 36, 72, 144, 288} |
| 5 | {11, 22, 44, 88, 176, 352} |
| 6 | {13, 26, 52, 104, 208} |
| 7 | {15, 30, 60, 120, 240} |

In some examples, the start positions corresponding to the 0-th redundant version (RV0), 1-st redundant version (RV1), 2-nd redundant version (RV2), and 3-rd redundant version (RV3) are determined as shown in Table 2. In Table 2, $N_{cb}$ refers to the size of the third bit sequence in the circular buffer. In a specific example, a location in the third bit sequence of a head element of the target subsequence is equal to the starting location corresponding to the redundant version with an index 0, that is, the location in the third bit sequence of the head element of the target subsequence is equal to 0.

Table 2

| Index | Starting location | |
|---|---|---|
| | LDPC first base graph matrix | LDPC second base graph matrix |
| 0 | 0 | 0 |
| 1 | $\left\lfloor \dfrac{17N_{cb}}{66Z} \right\rfloor Z$ | $\left\lfloor \dfrac{13N_{cb}}{50Z} \right\rfloor Z$ |
| 2 | $\left\lfloor \dfrac{33N_{cb}}{66Z} \right\rfloor Z$ | $\left\lfloor \dfrac{25N_{cb}}{50Z} \right\rfloor Z$ |
| 3 | $\left\lfloor \dfrac{56N_{cb}}{66Z} \right\rfloor Z$ | $\left\lfloor \dfrac{43N_{cb}}{50Z} \right\rfloor Z$ |

In a specific example, as shown in Table 2, the location in the third bit sequence of the head element of the target subsequence is equal to the starting location corresponding to the redundant version with an index 1, that is, the location in the third bit sequence of the head element of the target subsequence is equal to:

$$\left\lfloor \frac{17N_{cb}}{66Z} \right\rfloor Z \quad \text{or} \quad \left\lfloor \frac{13N_{cb}}{50Z} \right\rfloor Z.$$

In a specific example, as shown in Table 2, the location in the third bit sequence of the head element of the target subsequence is equal to the starting location corresponding to the redundant version with an index 2, that is, the location in the third bit sequence of the head element of the target subsequence is equal to:

$$\left\lfloor \frac{33N_{cb}}{66Z} \right\rfloor Z \quad \text{or} \quad \left\lfloor \frac{25N_{cb}}{50Z} \right\rfloor Z.$$

In a specific example, as shown in Table 2, the location in the third bit sequence of the head element of the target subsequence is equal to the starting location corresponding to the redundant version with an index 3, that is, the location in the third bit sequence of the head element of the target subsequence is equal to:

$$\left\lfloor \frac{56N_{cb}}{66Z} \right\rfloor Z \quad \text{or} \quad \left\lfloor \frac{43N_{cb}}{50Z} \right\rfloor Z.$$

In S104, send the fourth bit sequence.

In some embodiments, the fourth bit sequence does not include the first subsequence, that is, the first subsequence is transmitted implicitly. Based on this, the efficiency of data transmission may be improved and the transmission power consumption may be reduced.

In some embodiments, the second transmission node is the receiving end, and step S104 is implemented specifically as: sending the fourth bit sequence to the second transmission node.

In some embodiments, before the fourth bit sequence is sent, frequency modulation may also be performed on the fourth bit sequence, to improve the anti-interference capability during the data transmission and improve the reliability of communication.

In the embodiments of the present disclosure, the error correction encoding is performed on the data to be transmitted, and redundant information is added to the data to be transmitted, to obtain the data with the added redundant information (e.g., the second bit sequence). Furthermore, the interleaving processing is performed on the subsequence in the data with the added redundant information, so that the data may resist greater random interference and noise in the transmission process, thereby improving the error correction performance of communication.

For ease of understanding, the above-mentioned data transmission method and possible implementations thereof are specifically explained below in conjunction with some examples.

**Example 1**

In this example, the second bit sequence does not include the systematic punctured sequence.

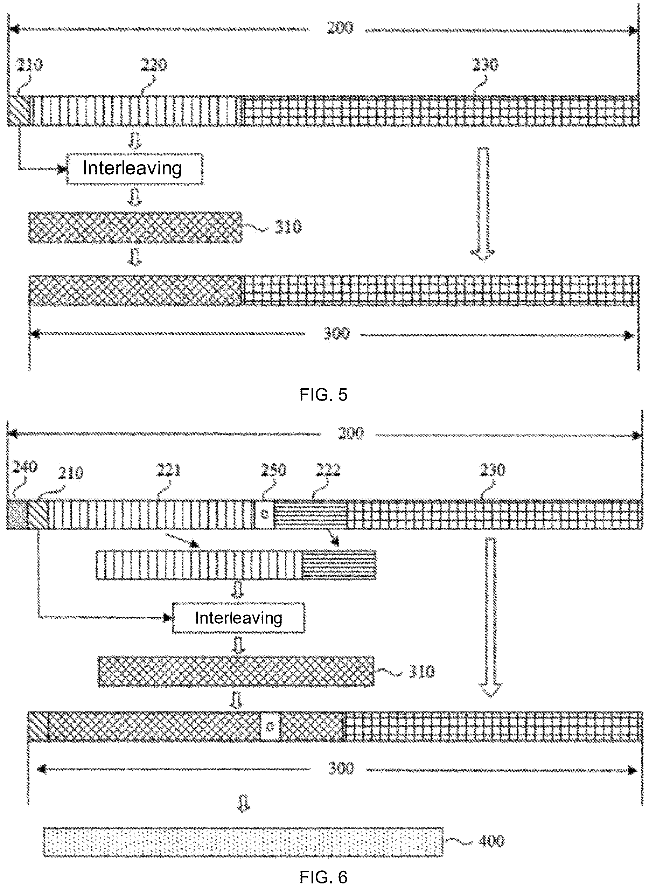

Referring to FIG. 5, the third bit sequence may be determined by: after determining the first subsequence 210 and the second subsequence 220 from the second bit sequence 200, performing the interleaving on the second subsequence 220 based on the first subsequence 210, to obtain the target subsequence 310; and merging the target subsequence 310 and other remaining bit sequence 230 in the second bit sequence 200, to constitute the third bit sequence 300 in the circular buffer. Furthermore, the bit selection is performed on the third bit sequence 300 to obtain the fourth bit sequence 400.

The first subsequence 210 is composed of one or more consecutive bits in the second bit sequence 200. The second subsequence 220 is composed of one or more consecutive bits in the second bit sequence 200. The target subsequence 310 is set at the header of the third bit sequence 300.

In some examples, the error correction encoding is performed on the first bit sequence with a size K, to obtain the second bit sequence with a size N, where both K and N are integers greater than 1.

In some examples, the size of the first subsequence satisfies the following relationship:

$$L = \left\lfloor \log_2(\mathrm{K}) \right\rfloor$$

where $\lfloor x \rfloor$ represents a maximum integer less than or equal to a real number *x*, K is used to represent the size of the first bit sequence, and L is used to represent the size of the first subsequence.

In some examples, the size of the first subsequence satisfies the following relationship:

$$L = \left\lfloor \log_2 \left( K' \right) \right\rfloor$$

where $\lfloor x \rfloor$ represents a maximum integer less than or equal to a real number *x*, K' is used to represent the size of the valid information bits, and L is used to represent the size of the first subsequence.

In some examples, the third bit sequence is determined based on the second bit sequence. The target subsequence in the third bit sequence is obtained by performing the interleaving on the second subsequence based on the first subsequence.

In some examples, the size of the target subsequence is an integer greater than 1, the size of the first subsequence is an integer greater than 0, and the size of the second subsequence is an integer greater than 1.

In some examples, after the third bit sequence 300 is obtained according to the example shown in FIG. 5, the bit selection may be performed on the third bit sequence, to obtain the fourth bit sequence 400 after the bit selection. Furthermore, the fourth bit sequence 400 is sent to the second transmission node.

In some examples, the above-mentioned performing the bit selection on the third bit sequence may be implemented as: performing the bit selection based on the redundant version. For example, the starting location for the bit selection is determined according to the redundant version, and then the bit selection is performed starting from the starting location, and when the tail bit of the third bit sequence has been selected, the selection is performed from the head bit (i.e., the head element of the third bit sequence). The redundant version may refer to the description in step S103, which will not be repeated herein.

In some examples, when the first node transmits data initially, a redundant version (RV0) with an index 0 is used for the transmission, so that the data transmitted initially includes the target subsequence, to ensure the performance of the encoding processing method; and, when the incremental redundancy hybrid automatic repeat request (IR-HARQ) is performed, it may be ensured that the receiving end may perform soft bit merging when receiving retransmission data, thereby reducing the decoding (also referred to as coding) complexity and improving the retransmission performance; and, if the initial transmission data is lost (e.g., the initial transmission data DCI, etc., is lost, etc.), the receiving end (e.g., the second transmission node), when considering the retransmission data of the sending end (e.g., the first transmission node) as the initial transmission data, may also perform a self-decoding operation.

In addition, in FIG. 5, the third bit sequence 300 includes the target subsequence 310 and the other bit sequence 230. The target subsequence 310 is located in the header of the third bit sequence 300. In this way, the target subsequence in the third bit sequence may be preferentially transmitted in an initial transmission, which may improve the reception performance of the initial transmission; then, if the reception and decoding of the initial transmission data fail, the initial transmission data and the retransmission data may be merged and then decoded, to improve the decoding performance of the retransmission; and, if the initial transmission data is lost (neither the control signaling nor the data are received), the retransmission may also be self-decoded, to ensure the reception performance of the retransmission data.

In this example, the first subsequence is a consecutive subsequence in the second bit sequence; and the second subsequence is a consecutive subsequence in the second bit sequence.

In this example, the size of the first subsequence is smaller than the size of the third subsequence.

In a specific example, the size of the valid information bits is 64, and the first bit sequence includes the valid information bits and a padding bit sequence with a size 2, and the size of the first bit sequence is K=66 bits; the error correction encoding is performed on the first bit sequence to obtain the second bit sequence with a size N=192; the size of the first subsequence is equal to L=6, and the indexes in the second bit sequence of the first subsequence are 0 to 5, that is, the indexes in the second bit sequence of the first subsequence constitute A=[0, 1, 2, ..., 5]; the size of the second subsequence is equal to 58, and the indexes in the second bit sequence of the second subsequence are 6 to 63, and the indexes in the second bit sequence of the second subsequence constitute B=[6, 7, 8, ..., 63]; the size of the other bit sequence is equal to 128, and the indexes in the second bit sequence of the other bit sequence are 64 to 191. The indexes in the second bit sequence of the first bit sequence are 0 to 65, respectively.

**Example 2**

In Example 2, the third bit sequence includes the first subsequence.

Referring to FIG. 6, the second bit sequence 200 includes a systematic punctured sequence 240, a first subsequence 210, a padding sequence 250, a second subsequence 220 and other bit sequence 230. The second subsequence 220 is separated into a subsequence 221 and a subsequence 222 by the padding sequence 250. The interleaving is performed on the second subsequence 220 based on the first subsequence 210, to obtain a target subsequence 310. The first subsequence 210, the padding sequence 250, the target subsequence 310, and the other bit sequences 230 together constitute a third bit sequence 300 in a circular buffer. The bit selection is performed on the sequence 300 in the circular buffer, to obtain a fourth bit sequence 400, and the fourth bit sequence 400 does not include the first subsequence 210 and the padding sequence 250. The systematic punctured sequence 240 is composed of systematic punctured bits with the error correction encoding. The valid information bits have a same content as a union set of the systematic punctured sequence 240, the first subsequence 210, and the second subsequence 220. The first bit sequence has a same content as a union set of the valid information bits and the padding sequence 250.

Optionally, the error correction encoding mode used in FIG. 6 is LDPC encoding. A size of the systematic punctured sequence 240 is q*Z bits, where Z is a lifting size of the LDPC encoding.

In Example 2, the size of the third bit sequence is determined by the size of the first subsequence.

Optionally, as shown in FIG. 6, the size of the third bit sequence 300 is equal to the size of the second bit sequence 200 minus the size of the systematic punctured sequence 240. The size of the third bit sequence is Ncb, and Ncb is determined as follows: Ncb = N-q*Z. Optionally, q is equal to 0, 1, or 2.

Assuming that the size of the first subsequence is L, the size of the third bit sequence is Ncb; if the third bit sequence does not include the systematic punctured sequence and the first subsequence, Ncb is determined as follows: Ncb = N-q*Z-L. Or, in a case where the third bit sequence does not include the systematic punctured sequence, the first subsequence and the padding sequence, the size of the third bit sequence is Ncb determined as follows: Ncb = N -q*Z- L - F, where F is an integer greater than 0, F is the size of the padding sequence, and N is the size of the second bit sequence.

In some examples, the error correction encoding is performed on the first bit sequence with a size K, to obtain the second bit sequence with a size N, where both K and N are integers greater than 1.

In some examples, the third bit sequence is obtained based on the second bit sequence. The target subsequence in the third bit sequence is obtained by performing the interleaving on the second subsequence of the second bit sequence according to the first subsequence of the second bit sequence; and the size of the target subsequence is an integer greater than 1, the size of the first subsequence is an integer greater than 0, and the size of the second subsequence is an integer greater than 1. The bit selection is performed on the third bit sequence to obtain the fourth bit sequence.

In some examples, the size of the third bit sequence is determined by the size of the second bit sequence.

In some examples, when the size of the third bit sequence is Ncb, the size of the third bit sequence satisfies the following relationship: Ncb = N - q*Z, and in this case, the sequences in the third bit sequence include the padding sequence and the first subsequence in the second bit sequence. The q is the number of systematic punctured columns in the corresponding base matrix, and N is the size of the second bit sequence. Optionally, q is equal to 0, 1, or 2.

## Example 3

In Example 3, the third bit sequence does not include the systematic punctured sequence and/or the first subsequence in the second bit sequence.

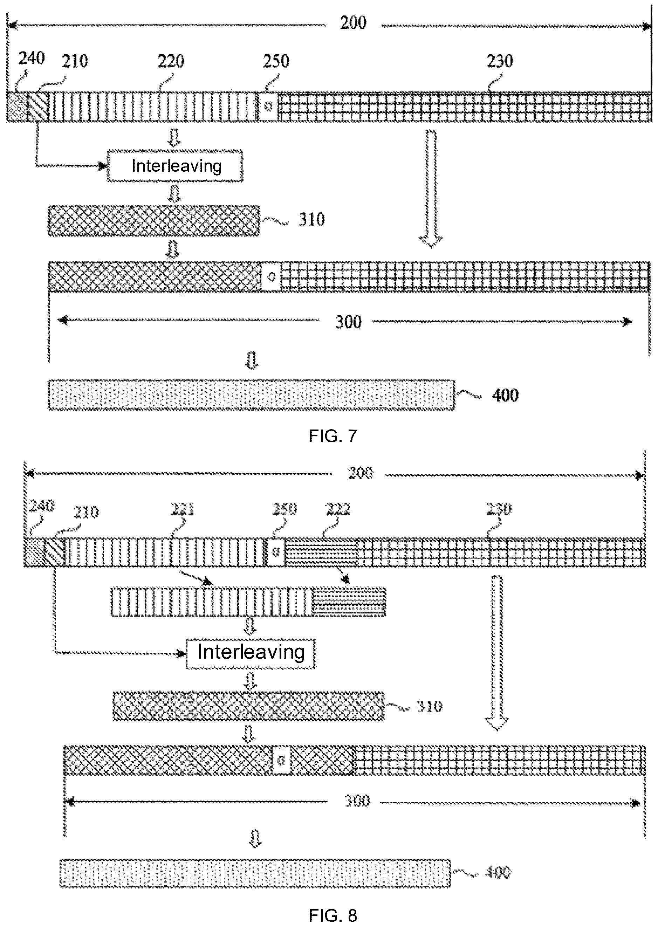

Referring to FIG. 7, the second bit sequence 200 includes the systematic punctured sequence 240, the first subsequence 210, the second subsequence 220, the padding sequence 250, and other bit sequence 230. The interleaving is performed on the second subsequence 220 according to the first subsequence 210 to obtain a target subsequence 310; the target subsequence 310, the padding sequence 250, and the other bit sequence 230 together constitute a third bit sequence 300 in the circular buffer. The bit selection is performed on the third bit sequence 300 to obtain a fourth bit sequence 400. A union set of the systematic punctured sequence 240, the first subsequence 210, and the second subsequence 220 has a same content as the valid bit information. The first bit sequence has a same content as a union set of the valid information bits and the padding sequence 250.

The fourth bit sequence 400 does not include the first subsequence 210 and the padding sequence 250.

As an example, a union set of the systematic punctured sequence 240, the first subsequence 210, the second subsequence 220, and the padding sequence 250 has a same content as the first bit sequence. That is, each of the systematic punctured sequence 240, the first subsequence 210, and the second subsequence 220 has a same content as a subsequence of the first bit sequence.

In this example, the first subsequence is a consecutive subsequence of the first bit sequence. The second subsequence is a consecutive subsequence of the first bit sequence.

As a specific example, the error correction encoding is performed on the first bit sequence with a size K to obtain the second bit sequence with a size N, where both K and N are integers greater than 1.

As a specific example, the third bit sequence is determined by the second bit sequence. The target subsequence in the third bit sequence is obtained by performing the interleaving on the second subsequence of the second bit sequence according to the first subsequence of the second bit sequence; where the size of the target subsequence is an integer greater than 1, the size of the first subsequence is an integer greater than 0, and the size of the second subsequence is an integer greater than 1.

As a specific example, the size of the second subsequence is determined by at least one of: the size of the first subsequence, the size of the first bit sequence, and the size of the second bit sequence.

As a specific example, in a case where the error correction encoding mode in FIG. 7 is systematic encoding, the first subsequence is a subset of the first bit sequence, and/or the second subsequence is a subset of the first bit sequence.

As a specific example, in a case where the error correction encoding mode in FIG. 7 is LDPC encoding, the size of the third bit sequence may satisfy the following relationship: Ncb = N-L - 2Z. Ncb is used to represent the size of the third bit sequence, N is used to represent the size of the second bit sequence, L is used to represent the size of the first subsequence, and Z is the lifting size used in LDPC encoding.

Furthermore, a value of the size of the first subsequence is a maximum positive integer less than or equal to log2(K-2Z). And/or, a value of the size of the second subsequence is determined based on the size of the first bit sequence, the size of the first subsequence and the lifting size; for example, the size of the second subsequence is equal to the size of the first bit sequence minus the size of the first subsequence and minus twice of the lifting size.

As a specific example, in a case where the error correction encoding mode in FIG. 7 is LDPC encoding, if the dimension of the base matrix is a matrix with 42 rows and 52 columns, that is, the systematic column number of the base matrix is kb=52-42=10; a value of the lifting size is Z=16. That is, indexes of the corresponding systematic bits in the second bit sequence are {0, 1, 2, 3, ..., kb*Z-1}, and indexes of the corresponding check bits in the second bit sequence are {kb*Z, kb*Z+1, kb*Z+2, kb*Z+3, ..., 52*Z-1}.

In some examples, the size of the valid information bits is K'=96 bits, the size of the first bit sequence is K=160, the size of the second bit sequence is N=832, the size of the fourth bit sequence is E=200, the size of the systematic punctured sequence is 32, the size of the first subsequence is L=6, the size of the second subsequence is 58, the size of the padding sequence is 64, and the size of other bit sequence is 672. The indexes of the first bit sequence located in the second bit sequence are 0 to K-1.

In some examples, the indexes of the first bit sequence located in the second bit sequence are 0 to 95, and the index in the second bit sequence of the head element in the first subsequence is equal to 2Z, and for example, when the lifting size Z is 16, the index in the second bit sequence of the head element in the first subsequence is equal to 2*16 =32. The size of the first subsequence is equal to L=6, and the indexes in the second bit sequence of the first subsequence are 32 to 37, that is, the indexes in the second bit sequence of the first subsequence constitute A={32, 33, 34, 35, 36, 37}; the size of the second subsequence is determined by the size K of the first bit sequence, the size L of the first subsequence, and the lifting size Z, and is specifically equal to K - L - 2Z, i.e., equal to 58, and the indexes in the second bit sequence of the second subsequence are 38 to 95, and the indexes in the second bit sequence of the second subsequence constitute B= {38, 39, 40, ..., 95}; the size of the other bit sequence is equal to 672, and the indexes in the second bit sequence of the other bit sequence are 160 to 831.

**Example 4**

In Example 4, the third bit sequence does not include the systematic punctured sequence and/or the first subsequence in the second bit sequence.

Referring to FIG. 8, the second bit sequence 200 includes the systematic punctured sequence 240, the first subsequence 210, the second subsequence 220, the padding sequence 250, and other bit sequence 230; and the second subsequence 220 is separated into a subsequence 221 and a subsequence 222 by the padding sequence 250. The interleaving is performed on the second subsequence 220 according to the first subsequence 210, to obtain a target subsequence 310. The padding sequence 250, the target subsequence 310, and the other bit sequences 230 together constitute a third bit sequence 300 in a circular buffer. Bit selection is performed on the sequence 300 in the circular buffer to obtain a fourth bit sequence 400, and the fourth bit sequence 400 does not include the first subsequence 210 and the padding sequence 250. The valid information bits have a same content as a union set of the systematic punctured sequence 240, the first subsequence 210, and the subsequence 221. The first bit sequence has a same content as a union set of the valid information bits and the padding sequence 250.

As a specific example, in a case where the error correction encoding mode in FIG. 8 is systematic encoding, the first subsequence is a subset of the first bit sequence, and/or the second subsequence is a subset of the first bit sequence.

As a specific example, the error correction encoding mode in FIG. 8 may be LDPC encoding.

As a specific example, the size of the second subsequence 220 may be determined by the code rate. The code rate R is equal to a maximum target code rate defined in the MCS table, and the code rate is a positive real number less than 1. For example, the code rate may be equal to 948/1024, or equal to 772/1024, or equal to 0.95; or, the code rate R may be equal to 948/1024 + Δ; or, the code rate R may be equal to 772/1024 + Δ; where Δ is a positive real number greater than -0.06 and less than or equal to 0.06. For example, Δ may be equal to 0.

As a specific example, the size of the first subsequence 210 is determined by the size K of the first bit sequence and the code rate R. The size of the second subsequence 220 is determined by the size K of the first bit sequence and the code rate R. In a specific example, a value of the size of the first subsequence 210 is a maximum positive integer less than or equal to log2(K/R); and a value of the size of the second subsequence 220 is f(K/R). K is the size of the first bit sequence, R is the code rate, and f(K/R) represents an integer obtained by rounding down, rounding up, or rounding for the real number K/R.

As a specific example, the size of the first subsequence 210 is determined by the size K' of the valid information bits and the code rate R. The size of the second subsequence 220 is determined by the size K' of the valid information bits and the code rate R. In a specific example, a value of the size of the first subsequence 210 is a maximum positive integer less than or equal to log2(K'/R); and a value of the size of the second subsequence 220 is f(K'/R). K' is the size of the valid information bits, R is the code rate, and f(K'/R) represents an integer obtained by rounding down, rounding up, or rounding for the real number K'/R.

As a specific example, the value of the size L of the first subsequence 210 is a maximum positive integer less than or equal to log2(K/R - 2Z). The value of the size of the second subsequence 220 is f(K/R) - 2Z. K is the size of the first bit sequence, R is the code rate, Z is the lifting size of the parity check matrix, and f(K/R) represents an integer obtained by rounding down, rounding up, or rounding for the real number K/R.

As a specific example, the size of the second subsequence 220 is determined by the size K of the first bit sequence and the code rate R, and the size of the first subsequence 210 is determined by the size of the second subsequence 220. In a specific example, the value of the size of the second subsequence 220 is f(K/R), where f(K/R) represents an integer obtained by rounding down, rounding up, or rounding for the real number K/R. The value of the size of the first subsequence 210 is a maximum positive integer less than or equal to log2(f(K/R)).

As a specific example, the size of the second subsequence is determined by the following parameters: the code rate R, the size K' of the valid information bits, the size L of the first subsequence, and the lifting size Z.

For example, the size of the second subsequence may be equal to f(K'/R - L - 2Z). For the function f(x), f(x) is used to represent a minimum integer greater than or equal to the real number x (i.e., rounding up), a maximum integer less than or equal to the real number x (i.e., rounding down), or equal to an integer obtained by rounding for the real number x.

As a specific example, in a case where the error correction encoding mode in FIG. 8 is LDPC encoding, the size of the third bit sequence may satisfy the following relationship: Ncb = N-L - 2Z. Ncb is used to represent the size of the third bit sequence, N is used to represent the size of the second bit sequence, L is used to represent the size of the first subsequence, and Z is the lifting size used in LDPC encoding. In some examples, N may be equal to 52Z or 68Z.

In some examples, the error correction encoding is performed on the first bit sequence with a size K to obtain the second bit sequence with a size N, where both K and N are integers greater than 1.

In some examples, the error correction encoding uses LDPC encoding, where the error correction encoding is performed on the first bit sequence with a size K according to the parity check matrix, to obtain the second bit sequence with a size N, where the parity check matrix is determined by the lifting size and the base matrix, and the base matrix includes two types of elements: an element indicating circular shift of an identity matrix and an element indicating an all-zero square matrix; the lifting size is equal to the dimension number of the identity matrix and the all-zero square matrix; and the lifting size is Z, where Z is an integer greater than 0.

In some examples, the dimension of the base matrix is a matrix of 42 rows and 52 columns, that is, the systematic column number of the base matrix is kb=52-42=10; and the value of the lifting size is Z=16. The size of the valid information bits is K'=96 bits, the size of the first bit sequence is K=160, the size of the second bit sequence is N=832, the size of the fourth bit sequence is E=160, and the code rate R is equal to 948/1024. Additionally, the size of the systematic punctured sequence is 32, the size of the first subsequence is L=6, the size of the second subsequence is 66, the size of the padding sequence is 64, and the size of the other bit sequence is 664. The third bit sequence in the circular buffer includes the padding sequence, the target subsequence, and the other bit sequence, that is, the size of the third bit sequence is 794. The bit selection is performed on the third bit sequence in the circular buffer to obtain the fourth bit sequence with a size E=160 bits.

In some examples, the indexes in the second bit sequence of the first subsequence are 32 to 37, that is, the indexes in the second bit sequence of the first subsequence constitute a set A={32, 33, 34, 35, 36, 37}; the indexes in the second bit sequence of the second subsequence constitute a set B={38, 39, 40, ..., 95}&{160, 161, ..., 167}; and the size of the other bit sequence is equal to 664, and the indexes in the second bit sequence of the other bit sequence are 168 to 831.

In some examples, the size of the valid information bits is K'=96, the size of the first bit sequence is K=160, the size of the second bit sequence is N=832, the size of the fourth bit sequence is E=160, and the code rate R is equal to 948/1024. Additionally, the size of the second subsequence is equal to f(K/R), and in a case where f(x) represents rounding up for the real number x, the size of the second subsequence is equal to 104. Then, the size of the first subsequence is a maximum positive integer less than or equal to log2(N), i.e., equal to 6. N is the size of the second subsequence, N=104. The size of the systematic punctured sequence is 32, the size of the padding sequence is 64, and the size of the other bit sequence is 626. That is, the indexes in the second bit sequence of the systematic punctured sequence constitute {0,1,2,...,31}, the indexes in the second bit sequence of the first subsequence constitute a set A={32, 33, 34, 35, 36, 37}; the indexes in the second bit sequence of the second subsequence constitute a set B={38, 39, 40,..., 95}& {160, 161, ..., 205}; and the indexes in the second bit sequence of the other bit sequence are 206 to 831.

### Example 5

In Example 5, the size of the first subsequence is determined by the following parameters: a row number m of a core matrix, a lifting size Z, and a size K' of the valid information bits.

The core matrix may be a sub-matrix of the base matrix. The row number m of the core matrix may be equal to a difference value between a number of columns with column weights greater than 1 and a systematic column number in the base matrix. In an example, a matrix composed of a check part of the core matrix is a dual diagonal structure. The core matrix is located in a sub-matrix with m rows and m+kb columns at an upper left corner in the base matrix, where kb is the systematic column number of the base matrix, and both m and kb are integers greater than 0. For example, for the base matrix with the row number of 42 and the column number of 52, the systematic column number of the base matrix is 52-42=10. The number of columns with column weights greater than 1 in the base matrix is equal to 14, and the row number m of the core matrix is equal to a difference value between 14 and 10, that is, m=4, and then, the core matrix is a sub-matrix with m rows and m+10 columns, i.e., a sub-matrix with 4 rows and 16 columns, located at the upper left corner of the base matrix. A number of check columns of the core matrix is equal to the row number of the core matrix, i.e., both equal to m.

In some examples, the base matrix is a matrix with 42 rows and 52 columns, that is, the systematic column number is 52-42=10; and the value of the lifting size is Z=16. The core matrix is located in a sub-matrix with m rows and 10+m columns at the upper left corner (i.e., a sub-matrix with 4 rows and 14 columns at the upper left corner) of the base matrix with 42 rows and 52 columns, where m is equal to 4.

In some examples, the size of the second subsequence is determined by the following parameters: the size K of the first bit sequence, the row number m of the core matrix, and the lifting size Z. The size of the first subsequence is determined by the size of the second subsequence.

In some examples, the size of the first subsequence is determined by the following parameters: the size K' of the valid information bits, the row number m of the core matrix, and the lifting size Z. Specifically, the value of the size L of the first subsequence is a maximum positive integer less than or equal to $\log2(K'+m*Z - 2Z)$. The size of the second subsequence is determined by the following parameters: the size K' of the valid information bits, the row number m of the core matrix, the size L of the first subsequence, and the lifting size Z. Specifically, the size of the second subsequence may be equal to $K'+m*Z - L - 2Z$.

It should be noted that the calculated size of the first subsequence is L, and the calculated size of the second subsequence is N, and if L is greater than $\log2(N)$, one of the following operations needs to be performed: 1, L=L-1; and 2, N=2^L.

In some examples, the size of the third bit sequence is determined by the following parameters: the size N of the second bit sequence, the size L of the first subsequence, and the lifting size Z. The size of the third bit sequence may satisfy the following relationship: Ncb = N - L - 2Z. Ncb is used to represent the size of the third bit sequence, N is used to represent the size of the second bit sequence, L is used to represent the size of the first subsequence, and Z is the lifting size used in LDPC encoding. In some examples, N is 52Z.

In some other examples, the size of the third bit sequence may satisfy the following relationship: Ncb = N - 2Z. Ncb is used to represent the size of the third bit sequence, N is used to represent the size of the second bit sequence, and Z is the lifting size of the parity check matrix used in the LDPC encoding. Optionally, N is 52Z.

In some examples, the size of the valid information bits is K'=96, the size of the first bit sequence is K=160, the size of the second bit sequence is N=832, and the size of the fourth bit sequence is E=180. Additionally, the size of the systematic punctured sequence is 32, the size of the first subsequence is L=7, the size of the second subsequence is 128, the size of the padding sequence is 64, and the size of the other bit sequence is 608. The indexes in the second bit sequence of the first subsequence constitute a set A={32, 33, 34, 35, 36, 37, 38}; the indexes in the second bit sequence of the second subsequence constitute a set B={39, 40, 41, ..., 94, 95}&{160, 161, ..., 229, 230}; the size of the other bit sequence is equal to 601, and the indexes in the second bit sequence of the other bit sequence are 231 to 831.

### Example 6

In Example 6, still as shown in FIG. 8, the size of the first subsequence is determined by the following parameter: the size K' of the valid information bits. And/or, the size of the second subsequence is determined by the following parameter: the size K' of the valid information bits.

In some examples, the value of the size L of the first subsequence is a maximum positive integer less than or equal to $\log2(K')$.

In some embodiments, the base matrix is a matrix with 42 rows and 52 columns, that is, the systematic column number of the base matrix is 52-42=10; and the lifting size is Z=16.

In some examples, the size of the third bit sequence may satisfy the following relationship: Ncb = N-L - 2Z, or, Ncb = N - 2Z. Ncb is used to represent the size of the third bit sequence, N is used to represent the size of the second bit sequence, L is used to represent the size of the first subsequence, and Z is the lifting size used in LDPC encoding. In some examples, N is 52Z.

In some examples, the size of the valid information bits is K'=96, the size of the first bit sequence is K=160, the size of the second bit sequence is N=832, and the size of the fourth bit sequence is E=260. Additionally, the size of the systematic punctured sequence is 32, the size of the first subsequence is L = floor (log2(K')) = 6; where floor(x1) represents the rounding down operation for the real number x, the size of the second subsequence is equal to the size of the valid information bits K' = 96, the size of the padding sequence is 64, and the size of the other bit sequence is 634. The indexes in the second bit sequence of the first subsequence constitute A={32, 33, 34, 35, 36, 37}; the indexes in the second bit sequence of the second subsequence constitute B={38, 39, 40, 41, ..., 94, 95}&{160, 161, ..., 196, 197}; the size of the other bit sequence is equal to 634, and the indexes in the second bit sequence of the other bit sequence are 198 to 831.

**Example 7**

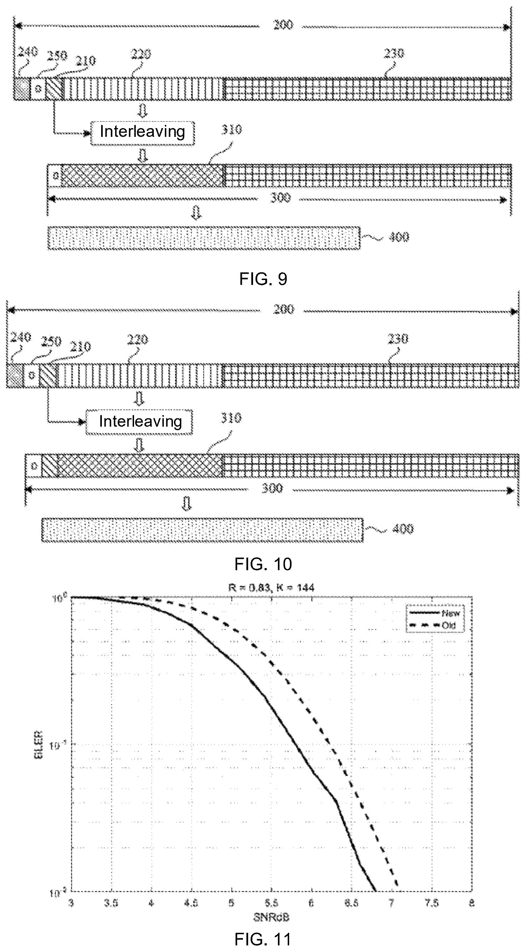

As shown in FIG. 9, the second bit sequence 200 includes: a systematic punctured sequence 240, a padding sequence 250, a first subsequence 210, a second subsequence 220, and other bit sequence 230. The interleaving is performed on the second subsequence 220 according to the first subsequence 210 to obtain a target subsequence 310; and the padding sequence 250, the target subsequence 310, and the other bit sequence 230 together constitute a third bit sequence 300 in a circular buffer. Or, the third bit sequence 300 in the circular buffer may also be composed of the padding sequence 250, the first subsequence 210, the target subsequence 310, and the other bit sequence 230 (not shown in the figure). Bit selection is performed on the third bit sequence 300 to obtain a fourth bit sequence 400, where the fourth bit sequence 400 does not include the first subsequence 210 and the padding sequence 250. The valid information bits include: the systematic punctured sequence 240, the first subsequence 210, and a part or all of bits of the second subsequence 220. The first bit sequence is a union set of the valid information bits and the padding sequence 250.

In some examples, the error correction encoding is performed on the first bit sequence with a size K to obtain the second bit sequence with a size N, where both K and N are integers greater than 1.

In some examples, the third bit sequence is determined based on the second bit sequence, where the target subsequence in the third bit sequence is obtained by performing the interleaving on the second subsequence of the second bit sequence according to the first subsequence of the second bit sequence; where the size of the target subsequence is an integer greater than 1, the size of the first subsequence is an integer greater than 0, and the size of the second subsequence is an integer greater than 1.

In some examples, the error correction encoding uses the LDPC code, where the error correction encoding is performed on the first bit sequence with a size K according to the parity check matrix, to obtain the second bit sequence with a size N, where the parity check matrix is determined by the lifting size and the base matrix, the base matrix includes two types of elements: an element indicating circular shift of an identity matrix and an element indicating an all-zero square matrix; the lifting size is equal to the dimension number of the identity matrix and the all-zero square matrix; and the lifting size is Z, where Z is an integer greater than 0.

Optionally, when a bit number of the first bit sequence is less than a systematic bit number, NULL bits may be used for padding. A number of padded bits is equal to the systematic bit number minus the bit number of the first bit sequence.

Optionally, a starting index for NULL bit padding is q*Z, where q is a systematic punctured column number in the base matrix, and Z is the lifting size.

In a specific example, an index position for NULL bit padding is {q*Z, q*Z+1, q*Z+2, ... , q*Z+p-1}, where q is the systematic punctured column number in the base matrix, p is the number of padded NULL bits, and p is a non-negative integer. In this way, the second subsequence to be interleaved is not merging of two separate subsequences, which facilitates the interleaving processing at the first transmission node and the decoding processing at the receiving end corresponding to the first transmission node, thereby simplifying the complexity of sending and receiving.

Optionally, the size of the third bit sequence may satisfy the following relationship: Ncb = N-L - 2Z. Ncb is used to represent the size of the third bit sequence, N is used to represent the size of the second bit sequence, L is used to represent the size of the first subsequence, and Z is the lifting size used in LDPC encoding. In some examples, N is 52Z.

In some examples, the dimension of the base matrix is a matrix of 42 rows and 52 columns, that is, the systematic column number of the base matrix is 52-42=10; and the value of the lifting size is Z=16. The size of the valid information bits is K'=96, the size of the first bit sequence is K=160, the size of the second bit sequence is N=832, and the size of the fourth bit sequence is E=160. The size of the systematic punctured sequence, the size of the first subsequence, the size of the padding sequence, and the size of the other bit sequence are the same as those of the possible implementations shown in the above Example 1 to Example 6.

Optionally, an index in the second bit sequence of a tail bit of the second subsequence is determined by at least one of the following parameters: the lifting size, the systematic column number of the base matrix, the column number of the core matrix, the size of the first bit sequence, the size of the first subsequence, and the size of the padding sequence.

For example, the index in the second bit sequence of the tail bit of the second subsequence may be equal to kb*Z, where kb is the systematic column number of the base matrix and Z is the lifting size.

For another example, the index in the second bit sequence of the tail bit of the second subsequence may be equal to n*Z, where n is the column number of the core matrix and Z is the lifting size.

For another example, the index in the second bit sequence of the tail bit of the second subsequence may be equal to (n-a)*Z, where n is the column number of the core matrix, Z is the lifting size, and a is equal to 1, 2, 3, or -1.

For another example, the index in the second bit sequence of the tail bit of the second subsequence may be equal to K + q*Z + p + L, where K is the size of the first bit sequence, q is a non-negative integer, Z is the lifting size, p is the size of the padding sequence, and L is the size of the first subsequence.

In some examples, the size of the second subsequence is determined by at least one of the following parameters: the lifting size, the systematic column number of the base matrix, the column number of the core matrix, the size of the first bit sequence, the size of the valid information bits, the size of the first subsequence, and the size of the padding sequence.

## Example 8

As shown in FIG. 10, the second bit sequence 200 includes: a systematic punctured sequence 240, a padding sequence 250, a first subsequence 210, a second subsequence 220, and other bit sequence 230. The interleaving is performed on the second subsequence 220 according to the first subsequence 210 to obtain a target subsequence 310; and the padding sequence 250, the first subsequence 210, the target subsequence 310, and the other bit sequence 230 together constitute a third bit sequence 300 in a circular buffer. Bit selection is performed on the third bit sequence 300 to obtain a fourth bit sequence 400, where the fourth bit sequence 400 does not include the first subsequence 210 and the padding sequence 250. The valid information bits include: the systematic punctured sequence 240, the first subsequence 210, and a part or all of bits of the second subsequence 220. The first bit sequence is a union set of the valid information bits and the padding sequence 250.

In Example 8, the third bit sequence includes the padding sequence and the first subsequence.

In some examples, the error correction encoding is performed on the first bit sequence with a size K to obtain the second bit sequence with a size N, where both K and N are integers greater than 1.

Optionally, when a bit number of the first bit sequence is less than a systematic bit number, NULL bits may be used for padding. A number of padded bits is equal to the systematic bit number minus the bit number of the first bit sequence.

Optionally, the third bit sequence satisfies the following relationship: Ncb = N-2Z. In this case, the third bit sequence includes the padding sequence and the first subsequence in the second bit sequence.

Optionally, the third bit sequence satisfies the following relationship: Ncb = N - 2Z - P - L. Ncb is the size of the third bit sequence, N is the size of the second bit sequence, Z is the lifting size, P is the size of the padding sequence, and L is the size of the first subsequence.

## Example 9

Example 9 shows a method for determining the first subsequence based on a high layer signaling.

Optionally, one or more of the following may be determined based on the high layer signaling: the size of the first subsequence, the size of the valid information bits, the index in the second bit sequence of the first subsequence, and the index in the second bit sequence of the head element of the first subsequence.

Optionally, the high layer signaling may include one or more of: downlink control information (DCI), a radio resource control (RRC) signaling, or a medium access control (MAC) signaling.

In some examples, the size of the first subsequence may be configured based on a DCI signaling. Furthermore, the size L of the first subsequence is determined based on the DCI signaling, and L bits are extracted starting from the starting location of the first subsequence to constitute the first subsequence. The starting location of the first subsequence may be a fixed starting location, and the fixed starting location may be pre-determined. Optionally, the fixed starting location may be any bit index in the second bit sequence. Optionally, when the error correction encoding is LDPC encoding, the fixed starting location may be a starting location determined based on the lifting size.

In some examples, the index in the second bit sequence of the head element of the first subsequence may be configured based on the RRC signaling. Furthermore, after the index in the second bit sequence of the head element of the first subsequence is determined based on the RRC signaling, the index may be used as the starting location of the first subsequence, and the first subsequence is extracted from the second bit sequence based on the size L of the first subsequence determined from the DCI signaling.

It should be understood that the longer the size of the first subsequence is, the better and more accurate the corresponding decoding performance is; and the shorter the size of the first subsequence is, the simpler the corresponding decoding is. Therefore, the sizes of first subsequences with different configurations may satisfy user requirements in different situations. The first subsequence is determined based on the high layer signaling, so that the first transmission node may flexibly configure the size of the first subsequence according to the state of the user equipment.

For example, taking an example in which the receiving end of the first transmission node is a base station, in a case where the base station is currently under a relatively low load, that is, in idle time at most of the time, the user equipment may be configured by the high layer signaling to use a relatively large size of the first subsequence, to improve the receiving performance of the base station. Conversely, if the base station is under a relatively high load, since more data needs to be processed, in this case, a shorter size of the first subsequence may be configured by the high layer signaling, to reduce the reception processing time.

It should be understood that the longer the first subsequence is, the more decoding attempts the receiving end needs to make upon decoding are, which means that the decoding complexity is higher; however, the longer the first subsequence is, the better the decoding performance for the receiving end is, that is, the transmission power may be reduced. Therefore, the advantages of determining the first subsequence based on the high layer signaling are that: the sending end may flexibly configure the size of the first subsequence according to the current state of the user equipment, and if the receiving end is a power-saving device or the user equipment is in a low-battery state, a smaller first subsequence is configured; and if the receiving end is a high-end device (e.g., a device in a high-battery state), a longer first subsequence may be set, which may reduce the transmission power or may improve the decoding performance of the receiving end, that is, determining the first subsequence based on the high layer signaling may improve the flexibility and reliability of communication. For example, in a case where the base station is currently under a relatively low load, that is, in the idle time at most of the time, the base station may configure the user equipment by the high layer signaling to use a relatively large size of the first subsequence, to improve reception performance; and conversely, if it is under a relatively high load, since more data needs to be processed, in this case, a shorter size of the first subsequence may be configured by the high layer signaling, to reduce the reception processing time.

### Example 10

Example 10 shows a method for determining the first subsequence based on a user equipment type.

In some examples, the size of the first subsequence may be determined based on the user equipment type. Furthermore, based on the size L of the first subsequence, L bits may be extracted starting from the starting location of the first subsequence to constitute the first subsequence. The starting location of the first subsequence may be a fixed starting location, and the fixed starting location may be pre-determined. Optionally, the fixed starting location may be any bit index in the second bit sequence. Optionally, when the error correction encoding is LDPC encoding, the fixed starting location may be a starting location determined based on the lifting size.

In addition, user equipment types may be distinguished according to different transmission data rates, e.g., a low-end device with a low data capability and a high-end device with a high data rate. Exemplarily, the user equipment types may be classified according to the following Table 3:

Table 3

| User equipment type | 1 | 2 | 3 | 4 | 5 | 6 | 7 | 8 |
|---|---|---|---|---|---|---|---|---|
| Downlink peak rate (Mbit/s) | 10 | 50 | 100 | 150 | 300 | 300 | 300 | 3000 |
| Uplink peak rate (Mbit/s) | 5 | 25 | 50 | 50 | 75 | 50 | 150 | 1500 |

The following are some example explanations of the method for determining the size of the first subsequence based on the user equipment. For example, the user equipment type is type 1 and/or type 2 in Table 3, and the size of the first subsequence is 0; if the user equipment type is type 3 and/or type 4 in Table 3, the size of the first subsequence is 2; if the user equipment type is type 5 and/or type 6 in Table 3, the size of the first subsequence is 4; and if the user equipment type is type 7 and/or type 8 in Table 3, the size of the first subsequence is 6.

Based on the size of the first subsequence, bits corresponding to the size of the first subsequence may be continuously extracted starting from a fixed starting location, to constitute the first subsequence, and the fixed starting location may be equal to any bit index, e.g., an integer from 0 to N-1, in the second bit sequence, where N is the size of the second bit sequence. When the error correction encoding is LDPC encoding, the fixed starting location may be a starting location determined based on the lifting size.

It should be understood that, for the receiving end, if the longer the first subsequence is, the more decoding attempts are required upon decoding, which means that the decoding complexity is higher; however, the longer the first subsequence is, the better the decoding performance for the receiving end is. Therefore, the advantage of determining the first subsequence according to the user equipment type is that: different user equipments may be adapted flexibly to use a size of the first subsequence with higher efficiency.

**Example 11**

Example 11 shows a method for determining the first subsequence based on a modulation order, a code rate, and a number of resources.

The modulation order is an integer greater than 0, the code rate is a positive real number less than 1, the number of resources is a number of subcarriers or resource elements carrying data, and the number of resources is an integer greater than 0. The modulation order, the code rate, and the number of resources may be determined by a downlink control signaling.

Optionally, the size of the first subsequence may be determined based on the modulation order, the code rate, a coding modulation scheme index, or the number of resources.

Optionally, the size of the first subsequence may satisfy the following relationship:

$$L = \left\lfloor \log_2 \left( Q \cdot R \cdot Re \right) \right\rfloor$$

where L is used to represent the size of the first subsequence, Q is used to represent the modulation order, R is used to represent the code rate, and Re is used to represent the number of resources, $\lfloor x \rfloor$ represents a maximum integer with a value less than or equal to x.

Optionally, the size of the first subsequence may satisfy the following relationship:

$$L = \left\lfloor \log_2 \left( Q \cdot R \cdot Re \right) / C \right\rfloor$$

where L is used to represent the size of the first subsequence, Q is used to represent the modulation order, R is used to represent the code rate, C is used to represent the number of code blocks, and Re is used to represent the number of resources, $\lfloor x \rfloor$ represents a maximum integer with a value less than or equal to x.

**Example 12**

Example 12 shows a performance analysis situation of the embodiments of the present disclosure.

In Example 12, the first bit sequence is composed of the information sequence and the CRC check sequence, that is, the CRC encoding is performed on the information sequence to obtain the CRC check sequence, and the information sequence and the CRC check sequence are merged into the first bit sequence, where a size of the information sequence is an integer greater than 0, and a size of the CRC check sequence is an integer greater than 0.

For example, the size of the valid information bits is K'=144, the size of the first bit sequence is K=240, and the LDPC encoding is performed on the first bit sequence, where the size of the transmission block is 128 bits, and the CRC check encoding is performed to obtain a CRC check sequence with a size 16 bits, and the valid information bits are composed of the transmission block and the CRC check sequence. Furthermore, when the LDPC encoding is performed, the used lifting size is Z=24, the base matrix is a matrix with 42 rows and 52 columns, and a second bit sequence with a size 1248 is obtained. It is determined that the size of the fourth bit sequence is E=172 bits, the size of the first subsequence is L=7; and the head bit of the first subsequence is located at an index of 2*Z in the LDPC second bit sequence, the first subsequence is L consecutive bits, and Z is the lifting size. The size of the systematic punctured sequence is 2*Z = 48 bits, the size of the second subsequence is 144 bits, the size of the padding sequence is 96 bits, and the size of the other bit sequence is 953 bits. Furthermore, the interleaving is performed on the second subsequence according to the first subsequence to obtain the target subsequence; the target subsequence, the padding sequence, and the other bit sequence together constitute the third bit sequence; and the bit selection is performed on the third bit sequence to obtain a fourth bit sequence with a size E=172, where the fourth bit sequence does not include the first subsequence and the padding sequence.

FIG. 11 shows a performance analysis situation of the embodiments of the present disclosure. A horizontal axis is the signal-to-noise ratio (unit: decibel, dB) of the additive white Gaussian noise channel (AWGN), and a vertical axis is a block error rate (BLER), and the closer the performance curve is to the left side of the horizontal axis, the better the performance is. A solid line (marked as New) is the performance curve corresponding to the encoding processing method in the present example, and a dotted line (marked as Old) is the performance curve of the traditional LDPC encoding.

Referring to FIG. 11, it can be seen that in a case where the target BLER is 0.01, a performance gain of about 0.6 dB may be obtained. Therefore, the encoding processing method of the present example may obtain better performance gain, that is, the beneficial effect is that: less energy may be sent in a case of the same target block error rate, because its corresponding signal-to-noise ratio is lower; or, in a case of the same signal-to-noise ratio, the data sending method of the present example has a lower block error rate, and for example, in a case where the signal-to-noise ratio is 6.0 dB, the block error rate of the encoding processing method of the present example reaches below 0.07, while the block error rate of the traditional method reaches 0.16.

**Example 13**

In Example 13, the LDPC encoding is performed on the valid information bits with a size K'=144, and the first bit sequence with a size K=240, to obtain the second bit sequence with a size 1248. When the LDPC encoding is performed, the used lifting size is Z=24, and the base matrix is a matrix with 42 rows and 52 columns. The third bit sequence is determined from the second bit sequence, and the target subsequence in the third bit sequence is obtained by performing the interleaving processing on the second subsequence in the second bit sequence based on the first subsequence in the second bit sequence.

In a specific example, the size of the second subsequence is equal to Z=24, the size of the first subsequence is equal to 4, and the indexes in the second bit sequence of the first subsequence constitute A={48, 49, 50, 51}; and the indexes in the second bit sequence of the second subsequence constitute B={72,73,74,75, ..., 94,95}. The interleaving processing includes: performing circular shift interleaving on Z=24 bits in the second subsequence according to the first subsequence. If a non-negative integer corresponding to the first subsequence is S, the left circular shift is performed on the second subsequence by S bits. Then, the bit selection is performed on the third bit sequence to obtain the fourth bit sequence.

In another specific example, the size of the second subsequence is equal to Z=48, the size of the first subsequence is equal to 5, and the indexes in the second bit sequence of the first subsequence constitute A={48, 49, 50, 51, 52}; and the indexes in the second bit sequence of the second subsequence constitute B={72,73,74,75, ..., 118, 119}. The interleaving processing includes: performing circular interleaving on multiple bit groups in the second subsequence according to the first subsequence, where a size of each bit group is equal to Z=24, and 2 bit groups are included, where an index in the second bit sequence of a head element of a first bit group is 72, and an index in the second bit sequence of a head element of a first bit group is 96. It is assumed that the non-negative integer corresponding to the first subsequence is S, and if S is less than Z=24, the left circular shift is performed on the first bit group in the second subsequence by S bits, and the second bit group remains unchanged; and if S is greater than or equal to Z=24, the left circular shift is performed on the first bit group in the second subsequence by S-24 bits, and the left circular shift is performed on the first bit group in the second subsequence by 1 bit. Then, the bit selection is performed on the third bit sequence to obtain the fourth bit sequence.

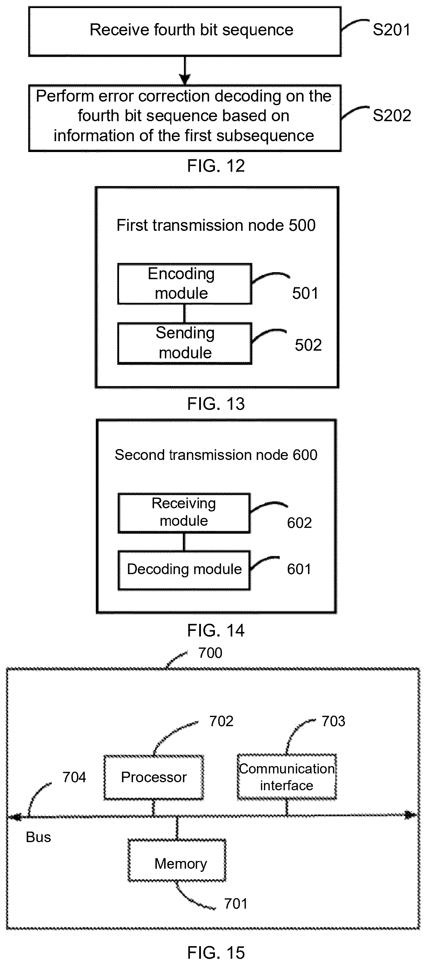

In addition, the embodiments of the present disclosure further provide a data transmission method, corresponding to the data transmission method shown in FIG. 2, and performed by the second transmission node. Referring to FIG. 12, the method includes the following step S201 to step S202.

In S201, receive a fourth bit sequence.

The fourth bit sequence is obtained by performing bit selection on a third bit sequence stored in a circular buffer, a target subsequence in the third bit sequence is obtained by performing interleaving processing on a second subsequence in a second bit sequence based on a first subsequence in the second bit sequence, and the second bit sequence is obtained by performing error correction encoding on a first bit sequence.

In some embodiments, the second transmission node may further perform the processing, such as demodulation, noise reduction or amplification, etc., on the received fourth bit sequence, so as to acquire more accurate information.

It should be understood that the relevant concepts of the first subsequence, the second subsequence, the target subsequence, the first bit sequence, the second bit sequence, the third bit sequence and the fourth bit sequence have been described in detail in the above step S101 to step S104, which may refer to the descriptions above and will not be repeated herein.

In addition, it should be noted that, taking the fourth bit sequence being sent from the first transmission node to the second transmission node as an example, and considering that after the first transmission node sends the fourth bit sequence to the second transmission node, the fourth bit sequence may be subject to some interference in the channel transmission, so the fourth bit sequence received by the second transmission node in step S201 may not be exactly the same as the fourth bit sequence in step S104, and the fourth bit sequence in step S201 may be understood as a sequence (or a log-likelihood ratio sequence) obtained from the fourth bit sequence in step S104 transmitted via a channel, which is not limited specifically in the present disclosure.

In S202, perform error correction decoding on the fourth bit sequence based on information of the first subsequence.

In some embodiments, the information of the first subsequence includes at least one of: a size of the first subsequence, an index of the first subsequence in the second bit sequence, and an index in the second bit sequence of a head element of the first subsequence.

In some embodiments, step S202 is specifically implemented as: performing bit de-selection on the fourth bit sequence, to obtain the third bit sequence. Based on the information of the first subsequence, the target subsequence in the third bit sequence is de-interleaved, to obtain a soft bit sequence for decoding. The soft bit sequence is decoded to obtain the first bit sequence.

In some embodiments, the information of the first subsequence is pre-stored by the second transmission node. For example, in a case where the fourth bit sequence is sent by the first transmission node, the first transmission node and the second transmission node agree in advance on the size and index, etc., of the first subsequence used in the encoding and decoding process. The information of the first subsequence may be determined by some parameters, which may refer to the description in the above, and will not be repeated herein.

The solutions of the embodiments of the present disclosure are introduced above mainly in terms of the method. It can be understood that in order to implement the above-mentioned data transmission method, a data transmission apparatus contains corresponding hardware structures and/or software modules for performing respective functions; in addition, in order to implement the above-mentioned data transmission method, the data transmission apparatus contains corresponding hardware structures and/or software modules for performing respective functions. Those skilled in the art should easily recognize that in conjunction with algorithm steps of the examples described in the embodiments of the present disclosure, the present disclosure can be implemented in the form of hardware or a combination of hardware and computer software. Whether a certain function is performed by the hardware or the computer software driving hardware, depends on the specific applications and restrictive conditions of designs of the technical solutions. Those skilled persons may use different methods for each specific application to implement the described functions, but this implementation should not be considered beyond the scope of the present disclosure.

In some embodiments of the present disclosure, the data transmission apparatus may be divided into functional modules according to the above-mentioned method embodiments, and for example, each functional module may be divided corresponding to each function, or two or more functions may be also integrated into a functional module. The above-mentioned integrated module may be implemented in the form of hardware, or may also be implemented in the form of software. It should be noted that, the division of modules in the embodiments of the present disclosure is schematic, and is only a division according to logical functions, and there may be other division modes in actual implementations. The following explains an example of dividing each functional module corresponding to each function.

FIG. 13 is a structural schematic diagram of a first transmission node provided in the embodiments of the present disclosure. As shown in FIG. 13, the first transmission node 500 includes: an encoding module 501 and a sending module 502.

The encoding module 501 is configured to: perform error correction encoding on a first bit sequence to obtain a second bit sequence; obtain a third bit sequence stored in a circular buffer based on the second bit sequence, where a target subsequence in the third bit sequence is obtained by performing interleaving processing on a second subsequence in the second bit sequence based on a first subsequence in the second bit sequence, and a size of the first subsequence is an integer greater than 0; perform bit selection on the third bit sequence to obtain a fourth bit sequence.

The sending module 502 is configured to send the fourth bit sequence.

In some embodiments, the first subsequence is composed of one or more consecutive bits in the second bit sequence; and/or the second subsequence is composed of one or more consecutive bits in the second bit sequence.

In some embodiments, an index in the second bit sequence and corresponding to an element in the first subsequence is different from an index in the second bit sequence and corresponding to an element in the second subsequence.

In some embodiments, a size of the third bit sequence is determined according to the size of the first subsequence.

In some embodiments, a size of the third bit sequence is greater than or equal to a sum of the size of the first subsequence and a size of the second subsequence.

In some embodiments, a size of the target subsequence is smaller than a size of the third bit sequence.

In some embodiments, the target subsequence is located in a header in the third bit sequence.

In some embodiments, a location in the circular buffer of a head element of the target subsequence is equal to a starting location corresponding to a redundant version with an index 0.

In some embodiments, the first subsequence is determined according to one or more of: the second bit sequence, a preset size of the fourth bit sequence, a size of the first bit sequence, a size of valid information bits, a modulation order, a code rate, a number of resources, a high layer signaling, a user equipment type and a transmission block size.

In some embodiments, the first bit sequence includes the first subsequence.

In some embodiments, the above-mentioned performing the error correction encoding on the first bit sequence to obtain the second bit sequence, includes: performing the error correction encoding on the first bit sequence based on a parity check matrix, to obtain the second bit sequence; where the parity check matrix is determined by a lifting size and a base matrix.

In some embodiments, an index in the second bit sequence of a head element of the first subsequence is equal to a non-negative integer multiple of the lifting size.

In some embodiments, an index in the second bit sequence of an element in the first subsequence is equal to an index of a systematic column of the parity check matrix.

In some embodiments, indexes in the second bit sequence of L elements in the first subsequence are indexes of L columns with smallest column weights in the parity check matrix, L is the size of the first subsequence, and L is a positive integer.

In some embodiments, a row number of the base matrix is less than or equal to a preset row number threshold; or, a column number of the base matrix is less than or equal to a preset column number threshold; or, a systematic column number of the base matrix is less than or equal to a preset systematic column number threshold; or, an encoding systematic column number is less than or equal to a fifth threshold, and the encoding systematic column number is used to calculate the lifting size; or, the lifting size is less than or equal to a preset lifting size threshold.

In some embodiments, the target subsequence in the third bit sequence is obtained by performing the interleaving processing on the second subsequence in the second bit sequence based on an interleaving index sequence corresponding to the first subsequence; where two interleaving index sequences respectively corresponding to any two different first subsequences are different.

In some embodiments, the target subsequence in the third bit sequence is obtained by performing the interleaving processing on the second subsequence in the second bit sequence based on an interleaving index sequence corresponding to the first subsequence; where, in two interleaving index sequences respectively corresponding to any two different first subsequences, there are at most T elements at same locations with same values, and T is a positive integer.

In some embodiments, a size of the second subsequence is equal to a size of the first bit sequence.

In some embodiments, the first bit sequence is determined by a transmission block; where a transmission block size of the transmission block is less than or equal to a third threshold, where the third threshold is an integer greater than or equal to 64.

In some embodiments, a size of the first bit sequence is less than or equal to a fourth threshold, where the fourth threshold is an integer greater than or equal to 64.

In some embodiments, a parity check matrix is determined according to a base graph matrix, and then error correction encoding is performed on the first bit sequence according to the parity check matrix, to obtain the second bit sequence. Optionally, the base graph matrix is a second base graph matrix, and a size of a base matrix corresponding to the second base graph matrix is 42 rows and 52 columns.

In addition, as shown in FIG. 14, the embodiments of the present disclosure further provide a structure of a second transmission node. The second transmission node 600 includes: a decoding module 601 and a receiving module 602.

The receiving module 602 is configured to receive a fourth bit sequence, where the fourth bit sequence is obtained by performing bit selection on a third bit sequence stored in a circular buffer, a target subsequence in the third bit sequence is obtained by performing interleaving processing on a second subsequence in a second bit sequence based on a first subsequence in the second bit sequence, and the second bit sequence is obtained by performing error correction encoding on a first bit sequence.

The decoding module 601 is configured to perform error correction decoding on the fourth bit sequence based on information of the first subsequence.

In some embodiments, the relevant contents of the first subsequence, the second subsequence, the target subsequence, the first bit sequence, the second bit sequence, the third bit sequence and the fourth bit sequence may refer to the descriptions in the above-mentioned method embodiments or the descriptions of the first transmission node 500 shown in FIG. 13, which will not be repeated herein.

In a case of implementing the functions of the integrated module mentioned above in the form of hardware, the embodiments of the present disclosure further provide a possible structure of a communication apparatus, and the communication apparatus is configured to perform the data transmission method provided in the embodiments of the present disclosure. As shown in FIG. 15, the communication apparatus 700 includes: a communication interface 703, a processor 702 and a bus 704. Optionally, the communication apparatus may further include a memory 701.

The processor 702 may implement or execute various illustrative logical blocks, modules and circuits described in conjunction with the embodiments of the present disclosure. The processor 702 may be a central processing unit, a general-purpose processor, a digital signal processor, an application specific integrated circuit, a field programmable gate array or any other programmable logic device, a transistor logic device, a hardware component, or any combination thereof. It may implement or execute various illustrative logical blocks, modules and circuits described in conjunction with the embodiments of the present disclosure. The processor 702 may also be a combination capable of implementing computing functions, for example, including a combination of one or more microprocessors, or a combination of a digital signal processor (DSP) and a microprocessor, etc.

The communication interface 703 is configured to connect with other devices through a communication network. The communication network may be an Ethernet, a radio access network, a wireless local area network (WLAN), or the like.

The memory 701 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As a possible implementation, the memory 701 may exist independently of the processor 702, and the memory 701 may be connected to the processor 702 through the bus 704, for storing instructions or program codes. When calling and executing the instructions or the program codes stored in the memory 701, the processor 702 is capable of realizing the data transmission method provided by the embodiments of the present disclosure.

As another possible implementation, the memory 701 may also be integrated with the processor 702.

The bus 704 may be an extended industry standard architecture (EISA) bus or the like. The bus 704 may be classified into an address bus, a data bus, and a control bus, or the like. For the convenience of representation, only one thick line is used in FIG. 15 for representation, but it does not mean that there is only one bus or one type of bus.

Some embodiments of the present disclosure provide a computer-readable storage medium (e.g., a non-transitory computer-readable storage medium) having stored computer program instructions therein, where the computer program instructions, when executed on a computer, cause the computer to perform the data transmission method as described in any one of the above embodiments.

In some examples, the computer may be a terminal device or a device with a function of the terminal device; or, the computer may be a network device or a device with a function of the network device. For example, the computer may be the above-mentioned communication apparatus, the first transmission node or the second transmission node, and the present disclosure does not limit the specific form of the computer.

In some examples, the computer-readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage media for storing information. The term "machine-readable storage medium" may include, but is not limited to, a radio channel and various other media capable of storing, containing, and/or carrying instructions and/or data.

The embodiments of the present disclosure provide a computer program product including instructions, and the computer program product, when executed on a computer, causes the computer to perform the data transmission method described in any embodiment of the above embodiments.

The above descriptions are merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined based on the protection scope of the claims.

**Claims**

1. A data transmission method, **characterized in that** the method is applied to a first transmission node, and comprises,

   performing error correction encoding on a first bit sequence to obtain a second bit sequence;
   obtaining a third bit sequence stored in a circular buffer based on the second bit sequence, wherein a target subsequence in the third bit sequence is obtained by performing interleaving processing on a second subsequence in the second bit sequence based on a first subsequence in the second bit sequence, and a size of the first subsequence is an integer greater than 0;
   performing bit selection on the third bit sequence to obtain a fourth bit sequence; and
   sending the fourth bit sequence.

2. The method according to claim 1, wherein the first subsequence is composed of one or more consecutive bits in the second bit sequence; and/or the second subsequence is composed of one or more consecutive bits in the second bit sequence.

3. The method according to claim 1, wherein an index in the second bit sequence and corresponding to an element in the first subsequence is different from an index in the second bit sequence and corresponding to an element in the second subsequence.

4. The method according to claim 1, wherein a size of the third bit sequence is determined according to the size of the first subsequence.

5. The method according to claim 1, wherein a size of the third bit sequence is greater than or equal to a sum of the size of the first subsequence and a size of the second subsequence.

6. The method according to claim 1, wherein a size of the target subsequence is smaller than a size of the third bit sequence.

7. The method according to claim 1, wherein the target subsequence is located in a header in the third bit sequence.

8. The method according to claim 1, wherein a location in the circular buffer of a head element of the target subsequence is equal to a starting location corresponding to a redundant version with an index 0.

9. The method according to claim 1, wherein the first subsequence is determined according to one or more of: the second bit sequence, a preset size of the fourth bit sequence, a size of the first bit sequence, a size of valid information bits, a modulation order, a code rate, a number of resources, a high layer signaling, a user equipment type and a transmission block size.

10. The method according to claim 1, wherein the first bit sequence comprises the first subsequence.

11. The method according to claim 1, wherein performing the error correction encoding on the first bit sequence to obtain the second bit sequence, comprises:
performing the error correction encoding on the first bit sequence based on a parity check matrix, to obtain the second bit sequence; wherein the parity check matrix is determined by a lifting size and a base matrix.

12. The method according to claim 11, wherein an index in the second bit sequence of a head element of the first subsequence is equal to a non-negative integer multiple of the lifting size.

13. The method according to claim 11, wherein an index in the second bit sequence of an element in the first subsequence is equal to an index of a systematic column of the parity check matrix.

14. The method according to claim 11, wherein indexes in the second bit sequence of L elements in the first subsequence are indexes of L columns with smallest column weights in the parity check matrix, L is the size of the first subsequence, and L is a positive integer.

15. The method according to claim 11, wherein

a row number of the base matrix is less than or equal to a preset row number threshold; or,
a column number of the base matrix is less than or equal to a preset column number threshold; or,
a systematic column number of the base matrix is less than or equal to a preset systematic column number threshold; or,
an encoding systematic column number is less than or equal to a fifth threshold, and the encoding systematic column number is used to calculate the lifting size; or,
the lifting size is less than or equal to a preset lifting size threshold.

16. The method according to claim 1, wherein the target subsequence in the third bit sequence is obtained by performing the interleaving processing on the second subsequence in the second bit sequence based on an interleaving index sequence corresponding to the first subsequence; wherein two interleaving index sequences respectively corresponding to any two different first subsequences are different.

17. The method according to claim 1, wherein the target subsequence in the third bit sequence is obtained by performing the interleaving processing on the second subsequence in the second bit sequence based on an interleaving index sequence corresponding to the first subsequence; wherein, in two interleaving index sequences respectively corresponding to any two different first subsequences, there are at most T elements at same locations with same values, and T is a positive integer.

18. The method according to claim 1, wherein a size of the second subsequence is equal to a size of the first bit sequence.

19. The method according to claim 1, wherein the first bit sequence is determined by a transmission block; wherein a transmission block size of the transmission block is less than or equal to a third threshold, and the third threshold is an integer greater than or equal to 64.

20. The method according to claim 1, wherein a size of the first bit sequence is less than or equal to a fourth threshold, wherein the fourth threshold is an integer greater than or equal to 64.

21. The method according to claim 1, wherein performing the error correction encoding on the first bit sequence to obtain the second bit sequence, comprises:

   determining a parity check matrix according to a base graph matrix, wherein the base graph matrix is a second base graph matrix, and a size of a base matrix corresponding to the second base graph matrix is 42 rows and 52 columns; and
   performing the error correction encoding on the first bit sequence according to the parity check matrix to obtain the second bit sequence.

22. A data transmission method, **characterized in that** the method is applied to a second transmission node, and comprises:

   receiving a fourth bit sequence, wherein the fourth bit sequence is obtained by performing bit selection on a third bit sequence stored in a circular buffer, a target subsequence in the third bit sequence is obtained by performing interleaving processing on a second subsequence in a second bit sequence based on a first subsequence in the second bit sequence, and the second bit sequence is obtained by performing error correction encoding on a first bit sequence; and
   performing error correction decoding on the fourth bit sequence based on information of the first subsequence.

23. The method according to claim 22, wherein the first subsequence is composed of one or more consecutive bits in the second bit sequence; and/or the second subsequence is composed of one or more consecutive bits in the second bit sequence.

24. The method according to claim 22, wherein an index in the second bit sequence and corresponding to an element in the first subsequence is different from an index in the second bit sequence and corresponding to an element in the second subsequence.

25. The method according to claim 22, wherein a size of the third bit sequence is determined according to the size of the first subsequence.

26. The method according to claim 22, wherein a size of the third bit sequence is greater than or equal to a sum of the size of the first subsequence and a size of the second subsequence.

27. The method according to claim 22, wherein a size of the target subsequence is smaller than a size of the third bit sequence.

28. The method according to claim 22, wherein the target subsequence is located in a header in the third bit sequence.

29. The method according to claim 22, wherein a location in the circular buffer of a head element of the target subsequence is equal to a starting location corresponding to a redundant version with an index 0.

30. The method according to claim 22, wherein the first subsequence is determined according to one or more of: the second bit sequence, a size of the fourth bit sequence, a size of the first bit sequence, a size of valid information bits, a modulation order, a code rate, a number of resources, a high layer signaling, a user equipment type and a transmission block size.

31. The method according to claim 22, wherein the first bit sequence comprises the first subsequence.

32. The method according to claim 22, wherein the second bit sequence is obtained by:
performing the error correction encoding on the first bit sequence based on a parity check matrix, to obtain the second bit sequence; wherein the parity check matrix is determined by a lifting size and a base matrix.

33. The method according to claim 32, wherein an index in the second bit sequence of a head element of the first subsequence is equal to a non-negative integer multiple of the lifting size.

34. The method according to claim 32, wherein an index in the second bit sequence of an element in the first subsequence is equal to an index of a systematic column of the parity check matrix.

35. The method according to claim 32, wherein indexes in the second bit sequence of L elements in the first subsequence are indexes of L columns with smallest column weights in the parity check matrix, L is the size of the first subsequence, and L is a positive integer.

36. The method according to claim 32, wherein

    a row number of the base matrix is less than or equal to a preset row number threshold; or,
    a column number of the base matrix is less than or equal to a preset column number threshold; or,
    a systematic column number of the base matrix is less than or equal to a preset systematic column number threshold; or,
    an encoding systematic column number is less than or equal to a fifth threshold, and the encoding systematic column is used to calculate the lifting size; or,
    the lifting size is less than or equal to a preset lifting size threshold.

37. The method according to claim 22, wherein the target subsequence in the third bit sequence is obtained by performing the interleaving processing on the second subsequence in the second bit sequence based on an interleaving index sequence corresponding to the first subsequence; wherein two interleaving index sequences respectively corresponding to any two different first subsequences are different.

38. The method according to claim 22, wherein the target subsequence in the third bit sequence is obtained by performing the interleaving processing on the second subsequence in the second bit sequence based on an interleaving index sequence corresponding to the first subsequence; wherein, in two interleaving index sequences respectively corresponding to any two different first subsequences, there are at most T elements at same locations with same values, and T is a positive integer.

39. The method according to claim 22, wherein a size of the second subsequence is equal to a size of the first bit sequence.

40. The method according to claim 22, wherein the first bit sequence is determined by a transmission block; wherein a transmission block size of the transmission block is less than or equal to a third threshold, and the third threshold is an integer greater than or equal to 64.

41. The method according to claim 22, wherein a size of the first bit sequence is less than or equal to a fourth threshold, wherein the fourth threshold is an integer greater than or equal to 64.

42. The method according to claim 22, wherein the second bit sequence is obtained by:

    determining a parity check matrix according to a base graph matrix, wherein the base graph matrix is a second base graph matrix, and a size of a base matrix corresponding to the second base graph matrix is 42 rows and 52 columns; and
    performing the error correction encoding on the first bit sequence according to the parity check matrix to obtain the second bit sequence.

43. A communication apparatus, **characterized by** comprising: a memory and a processor; wherein the memory is coupled to the processor;
    the memory is configured to store a computer program, and the processor, when executing the computer program, implements the method according to any one of claims 1 to 42.

44. A computer-readable storage medium, **characterized in that** the computer-readable storage medium has computer instructions stored thereon, and the computer instructions, when executed on a computer, cause the computer to perform the method according to any one of claims 1 to 42.

**100**

101                                                                           102

| First transmission node | | Second transmission node |
|---|---|---|

FIG. 1

| Perform error correction coding on a first bit sequence to obtain a second bit sequence | S101 |
|---|---|

| On the basis of the second bit sequence, obtain a third bit sequence stored in a circular buffer, wherein a target subsequence in the third bit sequence is obtained by performing interleaving processing on a second subsequence in the second bit sequence on the basis of a first subsequence in the second bit sequence, and the length of the first subsequence is an integer greater than 0 | S102 |
|---|---|

| Perform bit selection on the third bit sequence to obtain a fourth bit sequence having a matched rate | S103 |
|---|---|

| Send the fourth bit sequence | S104 |
|---|---|

FIG. 2

| 1,2,3,4,5,6,7,8,9 ··· 55,56,57 | 220 |
|---|---|

⇩

| Interleaving | ⟵ | 1,0,1,1,1 | 210 |
|---|---|---|---|

⇩

| 23,24,25,26,27,28 ··· 19,20,21,22 | 310 |
|---|---|

FIG. 3

(1)

(2)

(3)

FIG. 4

FIG. 5

FIG. 6

FIG. 7

FIG. 8

FIG. 9

FIG. 10

FIG. 11

```
┌─────────────────────────────────┐
│     Receive fourth bit sequence  │    S201
└─────────────────────────────────┘
                 │
                 ▼
┌─────────────────────────────────┐
│  Perform error correction decoding on the │    S202
│       fourth bit sequence based on        │
│    information of the first subsequence    │
└─────────────────────────────────┘
```

FIG. 12

```
┌──────────────────────────────────────┐
│   First transmission node 500          │
│                                         │
│        ┌──────────────┐                 │
│        │  Encoding     │      501        │
│        │  module       │                 │
│        └──────────────┘                 │
│        ┌──────────────┐                 │
│        │  Sending      │      502        │
│        │  module       │                 │
│        └──────────────┘                 │
└──────────────────────────────────────┘
```

FIG. 13

```
┌──────────────────────────────────────┐
│   Second transmission node 600         │
│                                         │
│        ┌──────────────┐                 │
│        │  Receiving    │      602        │
│        │  module       │                 │
│        └──────────────┘                 │
│        ┌──────────────┐                 │
│        │ Decoding module│     601        │
│        └──────────────┘                 │
└──────────────────────────────────────┘
```

FIG. 14

```
                    700
┌──────────────────────────────────────────┐
│                702            703           │
│          ┌──────────┐   ┌──────────────┐   │
│    704   │Processor │   │Communication │   │
│          └──────────┘   │  interface    │   │
│                         └──────────────┘   │
│ Bus ◄──────────┬─────────────┬──────────►  │
│          ┌──────────┐                       │
│          │  Memory   │                      │
│          └──────────┘                       │
│                   701                       │
└──────────────────────────────────────────┘
```

FIG. 15

## INTERNATIONAL SEARCH REPORT

| International application No. |
|---|
| **PCT/CN2023/143528** |

| **A.** | **CLASSIFICATION OF SUBJECT MATTER** |
|---|---|

H04L 1/00(2006.01)i

According to International Patent Classification (IPC) or to both national classification and IPC

| **B.** | **FIELDS SEARCHED** |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT: VEN: USTXT; WOTXT; EPTXT; CNKI: 比特, 序列, 纠错编码, 冗余, 交织, 子序列, 子段, 分段, 子集, 子块, 移位, 置换, 奇偶校验, bit, sequence, LDPC, Turbo, Polar, interleaving, segment, sub-block, sub-sequence, shift, permutation

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 102067640 B (FUJITSU LTD.) 30 April 2014 (2014-04-30) description, paragraphs [0029]-[0091], claims 1-16, and figures 1-16 | 1-44 |
| A | CN 111066252 A (ZTE CORP.) 24 April 2020 (2020-04-24) entire document | 1-44 |
| A | CN 114679185 A (ZTE CORP.) 28 June 2022 (2022-06-28) entire document | 1-44 |
| A | CN 109412747 A (NTT DOCOMO INC.) 01 March 2019 (2019-03-01) entire document | 1-44 |
| A | US 2018049065 A1 (ELECTRONICS AND TELECOMMUNICATIONS RESEARCH INSTITUTE) 15 February 2018 (2018-02-15) entire document | 1-44 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 March 2024** | **04 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/143528**

| Patent document cited in search report | | | Publication date (day/month/year) | Patent family member(s) | | | Publication date (day/month/year) |
|---|---|---|---|---|---|---|---|
| CN | 102067640 | B | 30 April 2014 | CN | 102067640 | A | 18 May 2011 |
| CN | 111066252 | A | 24 April 2020 | None | | | |
| CN | 114679185 | A | 28 June 2022 | None | | | |
| CN | 109412747 | A | 01 March 2019 | None | | | |
| US | 2018049065 | A1 | 15 February 2018 | US | 10616805 | B2 | 07 April 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310125012